# FASCICULE DE BREVET EUROPEEN

(11) **EP 2 139 642 B1**
(45) Date de publication et mention de la délivrance du brevet: **11.05.2011**
(21) Numéro de dépôt: 08787834.4
(22) Date de dépôt: 21.03.2008
(51) Int. Cl.: B24B 9/14

(54) **DISPOSITIF ET PROCÉDÉ DE PRÉPARATION D'UNE LENTILLE OPHTALMIQUE EN VUE DE SON USINAGE**
VORRICHTUNG UND VERFAHREN ZUR HERSTELLUNG EINER OPHTHALMISCHEN LINSE ZUR MASCHINELLEN VERARBEITUNG
DEVICE AND METHOD FOR PREPARING AN OPHTHALMIC LENS FOR MACHINING

(30) Priorité: 18.04.2007 FR 0702799
(43) Date de publication de la demande: 06.01.2010
(73) Titulaire: Essilor International (Compagnie Générale D'Optique), 94220 Charenton le Pont (FR)
(72) Inventeur: BRECHEMIER, Bernard, F-94220 Charenton Le Pont (FR); BOUTINON, Stéphane, F-94220 Charenton Le Pont (FR); BARANTON, Konogan, F-94220 Charenton Le Pont (FR)
(74) Mandataire: Chauvin, Vincent
(86) Numéro de dépôt international: PCT/FR2008/000387
(87) Numéro de publication internationale: WO 2008/142227

(56) Documents cités:
- WO-A-2006/058985
- WO-A-2006/117443

## Description

La présente invention concerne de manière générale le domaine de la lunetterie et plus particulièrement la préparation d'une lentille ophtalmique en vue de son détourage.

Elle concerne plus particulièrement un dispositif de préparation d'une lentille ophtalmique en vue de son usinage, comportant :
- un support apte à maintenir ladite lentille ophtalmique,
- des moyens de blocage comportant au moins un accessoire de blocage et un bras de manipulation de cet accessoire de blocage,
- un dispositif d'acquisition apte à acquérir une image de la lentille ophtalmique maintenue par le support,
- des moyens de traitement électroniques et/ou informatiques aptes, d'une part, à déduire de l'image acquise par le dispositif d'acquisition un référentiel optique de la lentille ophtalmique, et, d'autre part, à piloter en position le bras de manipulation et/ou le support pour appliquer ledit accessoire de blocage contre la lentille ophtalmique en une position de blocage donnée dépendant du référentiel optique déduit.

L'invention concerne également un procédé de préparation d'une lentille ophtalmique au moyen d'un tel dispositif de préparation.

La partie technique du métier de l'opticien consiste à monter une paire de lentilles ophtalmiques à détourer sur une monture sélectionnée par un porteur. Ce montage se décompose en trois opérations principales :
- l'acquisition de la forme du drageoir de chacun des deux cercles de la monture de lunettes si la monture est du type cerclé (c'est-à-dire de la forme des rainures qui parcourent l'intérieur de chaque cercle de la monture), ou de la forme d'une lentille de présentation ou d'un gabarit si la monture est du type semi-cerclé ou percé,
- le centrage de chaque lentille qui consiste à déterminer la position qu'occupera chaque lentille sur la monture afin d'être convenablement centrée en regard de la pupille de l'oeil du porteur de manière à ce qu'elle exerce convenablement la fonction optique pour laquelle elle a été conçue,
- le détourage de chaque lentille qui consiste à usiner ou à découper son contour à la forme souhaitée, compte tenu, d'une part, de la forme acquise du drageoir ou de la lentille de présentation ou du gabarit, et, d'autre part, des paramètres de centrage définis.

Dans le cadre de la présente invention, on s'intéresse à la deuxième opération dite de centrage. Il s'agit concrètement, pour l'opticien, de définir la position que devra occuper le contour final selon lequel la lentille devra être détourée par rapport au référentiel optique de ladite lentille (typiquement, ses marques usuelles ou son point de centrage optique), de manière à ce que, après assemblage de la lentille avec sa monture, la lentille soit convenablement positionnée en regard de la pupille de l'oeil du porteur.

Pour cela, dans un premier temps, l'opticien réalise des mesures sur le porteur et sur la monture choisie par ce dernier, afin de déterminer en particulier les positions des pupilles des yeux du porteur par rapport à la monture et donc par rapport au contour final.

Puis, dans un second temps, l'opticien dispose les lentilles sur un support de lentilles prévu sur un dispositif de préparation du type de celui défini en introduction. Le dispositif d'acquisition de ce dispositif de préparation détermine alors, pour chaque lentille, la position de son point de centrage optique à positionner en regard de la pupille d'un des yeux du porteur.

Dans un troisième temps, les moyens de traitement électroniques et/ou informatiques du dispositif de préparation déduisent la position du contour final sur chaque lentille à détourer en fonction des positions déterminées des points de centrage et des positions mesurées des pupilles des yeux du porteur par rapport au contour final. Selon la position du contour final sur chaque lentille, les moyens de traitement définissent sur chaque lentille un point de blocage et un axe de blocage (situé dans le plan moyen de la lentille).

Enfin, dans un dernier temps, un accessoire de blocage du dispositif de préparation est collé sur chaque lentille au niveau de son point de blocage, avec une orientation qui est fonction de l'axe de blocage déterminé. De cette manière, chaque lentille peut ensuite être extraite du dispositif de préparation puis placée dans un dispositif de détourage, le référentiel de chaque lentille étant conservé grâce aux positions des accessoires de blocage sur les lentilles. Le collage des accessoires de blocage est réalisé automatiquement au moyen du bras de manipulation qui est adapté à se déplacer relativement au support des lentilles ophtalmiques.

Toutefois, la demanderesse a constaté que, malgré le soin apporté à la réalisation et à l'assemblage des éléments structurels et optiques du dispositif de préparation, il arrive qu'une fois les lentilles ophtalmiques détourées, elles ne soient pas correctement centrées dans l'axe des yeux du porteur, ce qui peut entraîner une gêne visuelle pour ce dernier.

### OBJET DE L'INVENTION

Afin d'améliorer la précision du centrage des lentilles ophtalmiques, la présente invention propose un dispositif de préparation selon la revendication 1.

Le bras de manipulation et/ou le support comportent des mobilités de translation et/ou de rotation afin de pouvoir poser l'accessoire de blocage sur la lentille à une position précise. Ces mobilités sont réalisées au moyen de moteurs électriques pas-à-pas pilotés par les moyens de traitement. Ces moteurs permettent ainsi non seulement d'actionner le support et/ou le bras de manipulation, mais également de fournir aux moyens de traitement la position supposée du bras et/ou du support.

La demanderesse a remarqué, dans le cadre de ses travaux de recherche, que lors d'un déplacement rapide du support et/ou du bras de manipulation, les moteurs pas-à-pas ne sont pas capables de déterminer avec exactitude le nombre de pas réalisés. Cette « perte de pas » entraîne alors une perte de référentiel du support et/ou du bras de manipulation qui est préjudiciable à la précision de la pose de l'accessoire de blocage sur la lentille et donc à la précision du centrage de cette lentille.

Par ailleurs, même à vitesse modérée, ces moteurs fournissent généralement des données très légèrement erronées. Ces erreurs sont dues à la conception même de ces moteurs et ont tendance à s'accentuer au cours du temps. Elles sont appelées erreurs de dérive.

Enfin, des imprécisions lors de la réalisation et de l'assemblage des pièces du dispositif de préparation et l'évolution dans le temps de ces pièces (usure, chocs, variations de température....) concourent à diminuer la précision de la pose de l'accessoire de blocage sur la lentille.

On entend par élément de repérage un élément visible sur une image prise par le dispositif d'acquisition et repérable par les moyens de traitement électroniques et/ou informatiques.

Ainsi, grâce à l'invention, les moyens de traitement peuvent repérer la position du support et/ou du bras de manipulation afin de déduire l'écart entre la position réelle et la position de consigne du bras de manipulation relativement au support. La prise en compte de cet écart permet alors d'assurer un centrage correct de la lentille ophtalmique.

Selon une première caractéristique avantageuse de l'invention, les moyens de traitement sont adaptés à déterminer la position réelle du bras de manipulation et/ou la position du support en fonction de la position identifiée de l'élément de repérage.

Avantageusement, les moyens de traitement électroniques et/ou informatiques sont adaptés, d'une part, à identifier un écart entre ladite position réelle et une position de consigne du bras de manipulation relativement au support, et, d'autre part, à générer, en vue de l'usinage de la lentille ophtalmique, un signal comportant une donnée relative audit écart identifié, le dispositif de préparation comportant des moyens de communication avec un dispositif d'usinage qui sont adaptés à transmettre ledit signal.

Ici, l'accessoire de blocage est posé sur la lentille sans tenir compte de l'écart identifié. En revanche, cet écart est transmis au dispositif d'usinage de la lentille afin que ce dernier détoure la lentille en prenant en compte cet écart.

En variante, les moyens de traitement sont adaptés à piloter en position le bras de manipulation et/ou le support pour appliquer ledit accessoire de blocage sur la lentille au moyen d'une boucle de pilotage fonction, à chaque instant, de la position identifiée de l'élément de repérage.

Selon une autre caractéristique avantageuse de l'invention, les moyens de traitement électroniques et/ou informatiques sont adaptés, d'une part, à identifier un écart entre ladite position réelle et une position de consigne du bras de manipulation et/ou du support, et, d'autre part, à piloter la position du bras de manipulation et/ou du support en fonction dudit écart identifié.

Piloter le bras de manipulation relativement au support en fonction de l'écart identifié permet d'assurer un positionnement correct de l'accessoire de blocage sur la lentille et, par conséquent, un centrage correct de la lentille ophtalmique.

Plus précisément, si le support est fixe par rapport au dispositif d'acquisition, l'élément de repérage est situé sur le bras de manipulation et il permet de positionner avec précision l'accessoire de blocage sur la lentille.

Au contraire, si le support est mobile par rapport au dispositif d'acquisition et si le bras de manipulation est seulement adapté à se translater vers la lentille pour poser l'accessoire de blocage, l'élément de repérage est situé sur le support et il permet de positionner avec précision la lentille sous l'accessoire de blocage.

Selon une autre caractéristique avantageuse de l'invention, les moyens de blocage et le support sont tous les deux mobiles, sont pilotés en position par les moyens de traitement électroniques et/ou informatiques, et comportent chacun au moins un élément de repérage.

Le support de lentilles comporte généralement un carrousel pourvu d'une mobilité de pivotement autour d'un axe de rotation pour positionner successivement chaque lentille en regard du dispositif d'acquisition puis du bras de manipulation. Le bras de manipulation comporte quant à lui ici deux mobilités, dont une mobilité de pivotement qui, associée à celle du carrousel, permet de placer l'accessoire de blocage en regard du point de blocage de la lentille, et une mobilité de translation pour poser l'accessoire de blocage sur la lentille. Le bras de manipulation comporte en outre une troisième mobilité permettant de faire pivoter l'accessoire de blocage afin de l'orienter convenablement par rapport à l'axe de blocage de la lentille. Ainsi, le carrousel (support) et le bras de manipulation sont tous deux mobiles par rapport au dispositif d'acquisition.

Le dispositif d'acquisition permet alors d'acquérir une image des éléments de repérage et les moyens de traitement permettent de repérer leurs positions relatives dans le référentiel du dispositif d'acquisition. Les pertes de pas et les erreurs de dérive des moteurs sont alors aisément rectifiables par les moyens de traitement, ce qui assure un positionnement précis de l'accessoire de blocage par rapport à la lentille.

Selon une autre caractéristique avantageuse de l'invention, le dispositif d'acquisition est apte à acquérir une image d'une partie au moins du bras de manipulation et le bras de manipulation comporte au moins trois éléments de repérage positionnés les uns relativement aux autres de manière que les images d'au moins deux éléments de repérage apparaissent sur ladite image acquise.

Le bras de manipulation comporte généralement un corps allongé à l'extrémité duquel est disposée une tête d'accueil d'un accessoire de blocage. La troisième mobilité du bras de manipulation précitée correspond ici à une mobilité de pivotement de la tête d'accueil par rapport au bras allongé autour d'un axe sensiblement parallèle à l'axe de la lentille. Or, les éléments de repérage du bras de manipulation sont disposés sur la tête d'accueil. Selon l'orientation de la tête d'accueil par rapport au corps allongé, il arrive alors qu'un des éléments de repérage soit caché par le corps allongé. L'utilisation de trois éléments de repérage permet ici de s'assurer que deux éléments de repérage sont constamment visibles par le dispositif d'acquisition. La position exacte de ces deux éléments de repérage permet alors de déterminer la position de la tête d'accueil.

Ici, les trois éléments de repérage peuvent bien sûr être formés par trois ouvertures distinctes, mais aussi par une unique ouverture de grande dimension présentant trois zones de formes caractéristiques dont les positions sont facilement repérables par les moyens de traitement.

Avantageusement, le support étant mobile par rapport à un châssis et étant pourvu d'un élément de repérage du type précité, le dispositif d'acquisition est apte à acquérir successivement, pour deux positions distinctes du support, deux images d'une partie au moins du support et dudit élément de repérage, et les moyens de traitement électroniques et/ou informatiques sont aptes à déduire des deux positions successives dudit élément de repérage la position du support relativement au châssis.

Le support, qui est ici formé par le carrousel, est mobile autour d'un axe de rotation. L'utilisation d'un élément de repérage permet alors aux moyens de traitement de déterminer, à partir des deux images acquises par le dispositif d'acquisition, la position du centre de rotation du support.

En variante, le support étant mobile par rapport à un châssis et étant pourvu de deux éléments de repérage du type précité, le dispositif d'acquisition est apte à acquérir une image d'une partie au moins du support et desdits éléments de repérage et les moyens de traitement électroniques et/ou informatiques sont aptes à déduire des positions desdits éléments de repérage la position du support relativement au châssis.

Dans cette variante, les positions des deux éléments de repérage acquises sur une seule image permettent aux moyens de traitement de déterminer la position du centre de rotation du support.

Préférentiellement, le bras de manipulation et/ou le support comportent au moins deux éléments de repérage présentant des formes géométriques distinctes.

Par conséquent, ces deux éléments de repérage sont différentiés sur l'image acquise par le dispositif d'acquisition et sont différentiables par les moyens de traitement électroniques et/ou informatiques.

Considérons alors les deux éléments de repérage de la tête d'accueil du bras de manipulation. Si leurs images présentaient des formes identiques, les moyens de traitement ne pourraient pas déterminer quelle image correspond à quel élément de repérage. De ce fait, deux positions angulaires distinctes et séparées angulairement de 180 degrés de la tête d'accueil par rapport au corps allongé seraient alors envisageables par les moyens de traitement. Ici, les moyens de traitement peuvent déterminer, parmi ces deux positions, celle que présente réellement la tête d'accueil.

Selon une autre caractéristique avantageuse de l'invention, l'accessoire de blocage est pourvu dudit élément de repérage et les moyens de traitement électroniques et/ou informatiques sont aptes, d'une part, à détecter la présence ou l'absence dudit élément de repérage en fonction de l'image acquise par le dispositif d'acquisition, et, d'autre part, à en déduire la présence ou l'absence dudit accessoire de blocage sur le bras de manipulation.

Le bras de manipulation est adapté à saisir automatiquement un accessoire de blocage préalablement disposé par l'opticien sur le support. Il arrive que cet accessoire de blocage ait été incorrectement disposé sur le support, ou qu'il ait bougé lors d'un mouvement du support. Le bras de manipulation ne peut alors plus le saisir automatiquement. Ici, les moyens de traitement peuvent vérifier que l'accessoire a effectivement été saisi. Dans le cas contraire, ils peuvent par exemple piloter le bras de manipulation pour que ce dernier tente à nouveau de saisir cet accessoire de blocage ou un autre accessoire de blocage.

Préférentiellement, le support comporte une pluralité d'emplacements d'accueil de lentilles ophtalmiques, à chacun desquels est associé un élément de repérage du type précité, le support et le dispositif d'acquisition étant mobiles l'un par rapport à l'autre pour positionner successivement chaque emplacement d'accueil en une position de traitement par le dispositif d'acquisition dans laquelle ledit élément de repérage associé à cet emplacement d'accueil figure sur l'image acquise par le dispositif d'acquisition.

Préalablement à la dépose de l'accessoire de blocage sur la lentille, les moyens de traitement procèdent à plusieurs opérations successives. Ils pilotent tout d'abord le support pour positionner la lentille en regard du dispositif d'acquisition afin de déterminer le référentiel optique de celle-ci. Puis, ils pilotent, d'une part, le support pour qu'il s'efface de dessous le dispositif d'acquisition, et, d'autre part, le bras de manipulation pour le placer en regard du dispositif d'acquisition afin d'acquérir sa position exacte. Les moyens de traitement ramènent ensuite le support en position initiale de centrage, et pilotent enfin le bras relativement au support de manière à poser l'accessoire de blocage sur la lentille. Cet aller-retour du support peut générer des pertes de pas du moteur qui l'actionne. L'élément de repérage situé dans l'emplacement d'accueil permet alors de déterminer l'écart entre les positions du support avant et après cet aller-retour, de manière à rectifier la position du support pour correctement positionner le point de blocage de la lentille en regard de l'accessoire de blocage.

Préférentiellement, il est prévu une zone de chargement accessible à un usager et munie d'au moins un siège pour supporter une lentille ophtalmique lors de son chargement ou déchargement dans un des emplacements d'accueils, chaque emplacement d'accueil présentant un évidement et chaque siège portant un revêtement ou un éclairage polarisé visible par l'usager au travers de l'évidement de remplacement d'accueil correspondant.

Le dispositif d'acquisition comporte une source de lumière qui éclaire la lentille et qui est généralement polarisée. Si la lentille est elle aussi polarisée, la position angulaire de cette dernière par rapport à la source de lumière modifie la clarté de l'image vue par les moyens de capture d'image. Il existe en particulier une position de la lentille dans laquelle cette image est totalement sombre, de sorte qu'elle ne peut pas être traitée par les moyens de traitement.

Ici, le revêtement ou l'éclairage polarisé permet à l'usager (l'opticien) de bloquer la lentille sur le support en l'orientant convenablement, selon une position angulaire prescrite par le constructeur du dispositif de préparation. De cette manière, lorsque la lentille est en position de traitement par le dispositif d'acquisition, les directions de polarisation de la source de lumière et de la lentille sont sensiblement parallèles, si bien que l'image vue par les moyens de capture d'image présente une grande clarté.

En outre, la direction de polarisation de la lentille étant connue, le dispositif de préparation peut éventuellement centrer et bloquer la lentille en tenant compte de cette direction de polarisation, de sorte qu'une fois assemblée à la monture de lunettes choisie par le client, cette lentille soit polarisée horizontalement.

Selon une autre caractéristique avantageuse de l'invention, le support comporte une ouverture d'actualisation et les moyens de traitement électroniques et/ou informatiques sont aptes à piloter le support dans une position de repos dans laquelle les emplacements d'accueil sont situés dans une zone de chargement accessible à un usager et dans laquelle l'ouverture d'actualisation est en position de traitement par le dispositif d'acquisition.

Ainsi, lorsque le dispositif de préparation n'est pas utilisé, l'ouverture d'actualisation reste positionnée en regard du dispositif d'acquisition. Par conséquent, les moyens de capture d'image du dispositif d'acquisition peuvent continuellement voir l'image affichée par les moyens d'imagerie, sans que cette image soit déformée par une lentille.

Or, l'image source est formée par un motif de points dont les positions évoluent malencontreusement au cours du temps. Grâce à cette ouverture d'actualisation, lorsque le dispositif n'est pas utilisé, la forme du motif est régulièrement acquise de manière que, lors du centrage d'une lentille, l'image du motif déformé par cette lentille peut être comparée avec une image du motif non déformé récemment mise à jour et mémorisée par les moyens de traitement.

Avantageusement, chaque emplacement d'accueil du support est jouxté d'une ouverture d'étalonnage traversant le support, tandis que les moyens de traitement électroniques et/ou informatiques sont adaptés, d'une part, à piloter le bras de manipulation relativement au support pour disposer ladite ouverture d'étalonnage et le bras de manipulation dans une position de traitement par le dispositif d'acquisition, et, d'autre part, à déterminer la position de chaque élément de repérage du bras de manipulation en fonction de l'image acquise par le dispositif d'acquisition.

Afin de poser l'accessoire de blocage sur la lentille, les moyens de traitement pilotent des allers-retours du support pour centrer la lentille et pour contrôler la position du bras de manipulation. L'ouverture d'étalonnage permet alors au support de s'effacer de manière que le bras de manipulation puisse être vu par les moyens de capture d'image. Par ailleurs, le fait que chaque emplacement d'accueil est jouxté d'une ouverture d'étalonnage permet de diminuer la durée nécessaire aux allers-retours du support.

Selon une autre caractéristique avantageuse de l'invention, le support étant pourvu dudit élément de repérage, il est prévu au moins un bras de palpage de la lentille ophtalmique maintenue par le support, et les moyens de traitement électroniques et/ou informatiques sont adaptés à piloter le bras de palpage relativement au support en fonction de la position déterminée dudit élément de repérage du support.

Généralement, un tel dispositif de préparation comporte deux bras de palpage, l'un pour palper la face avant convexe de la lentille et l'autre pour palper sa face arrière concave. Ces deux bras de palpage sont montés sur le châssis qui soutient le support des lentilles. Les positions des bras par rapport au châssis étant généralement préalablement étalonnées, les éléments de repérage du support permettent alors de précisément positionner le support par rapport au châssis et donc par rapport aux bras de palpage.

Selon une autre caractéristique avantageuse de l'invention, il est prévu au moins un bras de palpage de la lentille ophtalmique, le support comporte à demeure des chemins d'étalonnage, et les moyens de traitement électroniques et/ou informatiques sont aptes, d'une part, à piloter la position du bras de palpage relativement au support pour lui faire palper lesdits chemins d'étalonnage, et, d'autre part, à déduire de ce palpage des paramètres d'étalonnage de la position relative du bras de palpage.

Actuellement, l'étalonnage de la position de chaque bras de palpage par rapport au support est réalisé au moyen d'un calibre étalon dont la forme est précisément connue. Ici, l'utilisation coûteuse et fastidieuse du calibre étalon devient obsolète puisque le support lui-même porte des moyens d'étalonnage.

Selon une autre caractéristique avantageuse de l'invention, au moins un des chemins d'étalonnage est pourvu d'un élément de repérage du type précité, tandis que les moyens de traitement électroniques et/ou informatiques sont aptes, d'une part, à piloter le support pour positionner ledit chemin d'étalonnage en position de traitement par le dispositif d'acquisition, et, d'autre part, à déduire de l'image acquise par le dispositif d'acquisition une partie au moins desdits paramètres d'étalonnage.

Les éléments de repérage sont ici des ouvertures visibles sur l'image acquise par le dispositif d'acquisition et repérables par palpage par le bras de palpage. Les moyens de traitement peuvent alors mettre en concordance les informations obtenues par le dispositif d'acquisition et celles acquises par le bras de palpage afin de calculer des paramètres d'étalonnage adéquats.

Avantageusement, le support présentant une mobilité de pivotement autour d'un axe de rotation, lesdits chemins d'étalonnage comportent au moins deux rainures rectilignes non parallèles situées dans un plan orthogonal audit axe de rotation et un pan incliné par rapport audit axe de rotation. _

Ici, le bras de palpage comporte une mobilité de rotation par rapport au châssis, selon un axe parallèle à l'axe de rotation du support, et une mobilité de translation également parallèle à cet axe. De ce fait, pour positionner l'extrémité du bras de palpage en regard d'un point déterminé de la lentille maintenue par le support, il est nécessaire de simultanément piloter les rotations du bras de palpage et du support.

La position du centre de rotation du support étant connue, le palpage de deux rainures non parallèles permet de déterminer la position du centre de rotation du bras de palpage dans le plan du support.

En variante, il est possible de prévoir deux paires de rainures situées à des altitudes distinctes. De cette manière, connaissant la position de l'axe de rotation du support, le palpage des deux paires de rainures permet de déterminer la position de l'axe de rotation du bras de palpage par rapport à celle de l'axe de rotation du support.

Le pan incliné permet quant à lui d'étalonner la mobilité de translation du bras de palpage. En particulier, si le dispositif comporte deux bras de palpage destinés à être disposés de part et d'autre de la lentille pour la palper, le palpage des faces supérieure et inférieure du pan incliné permet d'étalonner la distance séparant les extrémités de ces bras de palpage.

Avantageusement, les moyens de traitement électroniques et/ou informatiques sont aptes à :
- détecter une ou plusieurs zones de conflit de la lentille ophtalmique maintenue par le support dans chacune desquelles le bras de palpage risque d'entrer en conflit contre un organe du support,
- piloter le bras de palpage relativement au support pour palper au moins une face optique de ladite lentille ophtalmique excepté dans ladite zone de conflit, le bras de palpage étant piloté dans un plan moyen de la lentille ophtalmique pour suivre dans ce plan moyen un contour prédéterminé tout en étant simultanément rappelé contre ladite face optique de la lentille ophtalmique selon une direction sensiblement transversale audit plan moyen,
- acquérir des coordonnées d'une pluralité de points du contour prédéterminé n'appartenant pas à ladite zone de conflit, et,
- calculer des coordonnées d'une pluralité de points du contour prédéterminé appartenant à ladite zone de conflit, compte tenu au moins de la forme du contour prédéterminé dans le plan moyen et des coordonnées de points palpés sur ladite face optique de la lentille ophtalmique.

L'acquisition de la forme des cercles de la monture destinée à accueillir la lentille ophtalmique en préparation (ou l'acquisition de la forme d'une lentille de présentation ou d'un gabarit) fournit aux moyens de traitement électroniques et/ou informatique des données relatives à la forme d'un contour prédéterminé selon lequel il conviendra de détourer la lentille. En fonction de cette forme et des paramètres de centrage calculés, le bras de palpage va tenter de palper la face optique de la lentille maintenue par le support selon un contour tridimensionnel dont le projeté, dans le plan moyen de la lentille, présente une forme identique à celle du contour prédéterminé.

Lors de ce palpage, il arrive que le support de la lentille, en général les pinces qui la maintiennent, se trouve sur la trajectoire du bras de palpage. Par conséquent, les moyens de traitement ne peuvent pas acquérir l'ensemble des données caractérisant le contour tridimensionnel.

Ici, pour éviter que le bras de palpage vienne en butée contre les pinces de maintien de la lentille et ne se brise, les moyens de traitement détectent sur la lentille des zones de conflit dans lesquelles le bras de palpage ne devra pas entrer. Afin de palper le contour tridimensionnel, les moyens de traitement peuvent alors soit piloter le bras de manière à ce qu'il se lève dans les zones de conflit, soit le piloter de manière à ce qu'il contourne ces zones. Puis, les moyens de traitement déterminent, par interpolation, la forme du contour tridimensionnel dans les zones non palpées. Cette interpolation est réalisée à partir de la forme du contour prédéterminé et de celle de la face optique de la lentille. La forme de cette face optique, qui est généralement sphérique ou cylindrique, peut en effet être approximée à partir des coordonnées d'une pluralité de points palpés sur la lentille.

Avantageusement, ledit accessoire de blocage étant manipulé par le bras de manipulation et présentant une face de contact apte à s'appliquer contre la lentille ophtalmique maintenue par le support, le bras de manipulation comporte un corps allongé et une tête d'accueil de l'accessoire de blocage, ladite tête d'accueil étant reliée au corps allongé par une liaison rotule présentant une mobilité de rotation pilotée par les moyens de traitement électroniques et/ou informatiques et deux mobilités de rotation libres autour d'un point de pivotement situé sur ladite face de contact.

Le galbe d'une lentille, et en particulier le rayon de courbure moyen de sa face avant convexe, dépend essentiellement de ses puissances optiques. Afin de présenter des puissances optiques importantes, la face avant d'une lentille doit par conséquent présenter un rayon de courbure moyen réduit. Or, l'accessoire de blocage n'est pas nécessairement posé au centre de la lentille, mais peut être décalé sur sa face avant. Ici les deux mobilités de rotation libres permettent à l'accessoire de blocage de s'incliner, de manière que l'ensemble de sa face de contact s'applique sur la lentille.

Lorsque l'accessoire de blocage pivote librement pour s'orienter convenablement par rapport à la face avant de la lentille, il convient d'éviter que ce pivotement ne décale l'accessoire par rapport au point de blocage de la lentille, ce qui engendrerait des erreurs de centrage. La position du point de pivotement permet de s'assurer que, lorsque l'accessoire de blocage pivote autour du point de pivotement, le centre de sa face de contact reste centré par rapport au bras de manipulation et donc par rapport au point de blocage de la lentille.

Avantageusement alors, la tête d'accueil comporte un alésage conique divergent vers son embouchure et chaque accessoire de blocage comporte une embase conique convergente enfichable dans l'alésage conique divergent de la tête d'accueil.

Lorsque l'accessoire de blocage a été posé sur la lentille, et que le bras de manipulation remonte, l'accessoire de blocage doit se désengager du bras sans forcer pour éviter que l'accessoire de blocage ne se déplace sur la face avant de la lentille. Si l'accessoire de blocage est incliné, la forme conique de son embase évite que celle-ci ne frotte contre l'alésage de la tête d'accueil du bras de manipulation durant la remontée de ce dernier.

L'invention concerne également un procédé de préparation comportant les étapes de :
a - piloter le support pour disposer l'un des emplacements d'accueil en position de traitement par le dispositif d'acquisition, puis
b - acquérir une première image de la lentille ophtalmique maintenue dans ledit emplacement d'accueil et de l'élément de repérage de cet emplacement d'accueil,
c - piloter le bras de manipulation et le support pour disposer l'ouverture d'étalonnage jouxtant ledit emplacement d'accueil et le bras de manipulation dans une position de traitement par le dispositif d'acquisition, puis
d - acquérir une image du bras de manipulation et de l'élément de repérage de ce bras de manipulation,
e - identifier un écart entre une position de consigne du bras de manipulation et sa position réelle déduite de la position de l'image acquise de l'élément de repérage du bras de manipulation,
f - piloter le support pour ramener ledit emplacement d'accueil en position de traitement par le dispositif d'acquisition,
g - acquérir une deuxième image de la lentille ophtalmique maintenue dans ledit emplacement d'accueil et de l'élément de repérage de cet emplacement d'accueil,
h - identifier un écart entre une position de consigne du support et sa position réelle déduite des positions des première et deuxième images acquises de l'élément de repérage dudit emplacement d'accueil, et enfin
i - piloter le bras de manipulation vers le support pour appliquer ledit accessoire de blocage contre la lentille ophtalmique.

### DESCRIPTION DÉTAILLÉE D'UN EXEMPLE DE RÉALISATION

La description qui va suivre en regard des dessins annexés d'un mode de réalisation, donné à titre d'exemple non limitatif, fera bien comprendre en quoi consiste l'invention et comment elle peut être réalisée.

Dans les dessins annexés :
- la figure 1 est une vue d'ensemble en perspective de l'extérieur d'un dispositif de préparation de lentilles ophtalmiques selon l'invention, muni d'un capotage ;
- la figure 2 est une vue similaire à la figure 1, une porte d'accès du capotage ayant été ouverte pour permettre le chargement et le déchargement d'une paire de lentilles ophtalmiques et d'accessoires de blocage sur un support du dispositif ;
- la figure 3 est une vue en perspective de pinces de maintien d'une lentille ophtalmique, permettant le chargement et le maintien de la lentille ophtalmique sur le support de la figure 2 ;
- la figure 4 est une vue en perspective de l'intérieur du dispositif de préparation de la figure 1 muni de son support, d'un dispositif d'acquisition d'image et d'un bras de manipulation, dans une configuration du support et du bras de manipulation dans laquelle le dispositif d'acquisition peut contrôler la position du bras de manipulation ;
- la figure 5 est une vue en perspective du bras de manipulation de la figure 4 ;
- les figures 6 et 7 sont des vues en perspective et de dessus du support de la figure 2 ;
- la figure 8 est une vue en perspective de l'intérieur du dispositif de préparation de la figure 1, dans une configuration du support dite de repos où les lentilles et les accessoires de blocage sont disposés en regard de la porte d'accès ;
- la figure 9 est une vue en perspective de l'intérieur du dispositif de préparation de la figure 1, dans une configuration du support où l'une des lentilles peut être centrée par le dispositif d'acquisition de la figure 4 ; et
- la figure 10 est une vue d'un cliché d'une des lentilles ophtalmiques acquis par le dispositif d'acquisition d'images de la figure 4.

### Dispositif

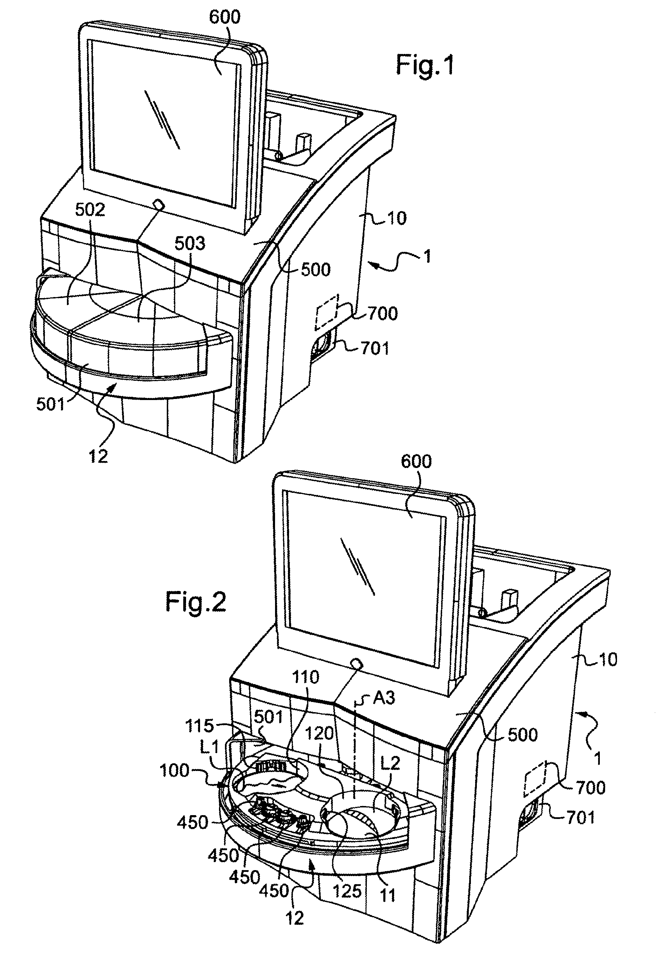

Le dispositif de préparation 1 représenté sur les figures 1, 2 et 4 comporte plusieurs organes montés sur un châssis commun 10 dont :
- un support de lentilles comportant un carrousel 100 conçu et agencé pour réceptionner une paire de lentilles L1, L2 et des accessoires de blocage 450, afin de les faire circuler entre plusieurs positions ;
- un dispositif d'acquisition d'image 200 servant à la mesure automatique de diverses caractéristiques optiques et géométriques des lentilles L1, L2 pour déterminer un référentiel de centrage de chaque lentille ;
- des moyens de palpage 300 conçus et agencés pour palper chaque lentille ophtalmique L1, L2 en préparation ;
- des moyens de blocage 400 comprenant les accessoires de blocage 450 et un bras de manipulation 401 conçu et agencé pour déposer un des accessoires de blocage 450 sur chaque lentille ophtalmique L1, L2 ;
- un capotage 500 renfermant l'ensemble des organes précités pour leur protection et possédant une porte 501 d'accès restreint ;
- un écran d'affichage 600 tactile de type LCD ou TFT ou encore LED ; et
- des moyens de traitement 700 électroniques et informatiques pour piloter les différents organes précités.

### Les lentilles ophtalmiques

Les lentilles ophtalmiques L1, L2 en préparation sont des lentilles à détourer fournies par un fabricant de lentilles. Elles peuvent par exemple être unifocales, multifocales à pastille(s) de vision de près ou intermédiaire avec discontinuité de puissance, ou encore multifocales à addition progressive de puissances. La lentille considérée ici sera unifocale.

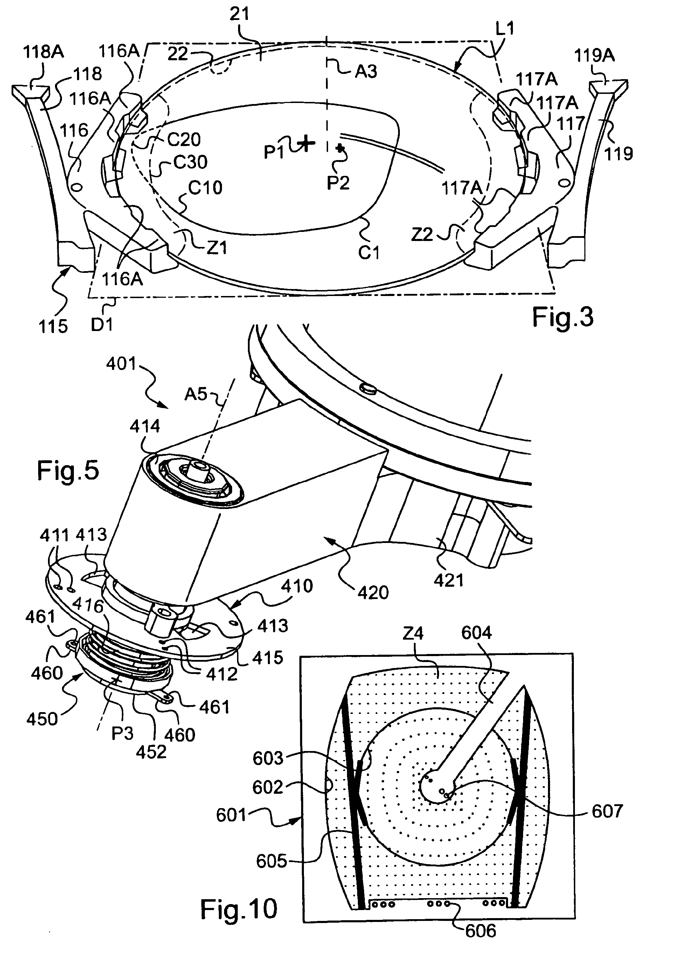

Comme le montre la figure 3, la lentille ophtalmique L1 présente, à l'instar de la lentille ophtalmique L2 non représentée sur cette figure, deux faces optiques, dont une face avant convexe 21 et une face arrière concave 22, ainsi qu'une tranche périphérique de forme circulaire.

On définit le plan général D1 de la lentille ophtalmique L1 comme le plan dans lequel s'étend l'arête arrière de la tranche périphérique de la lentille. On définit par ailleurs l'axe A3 de la lentille ophtalmique L1 comme l'axe qui est orthogonal au plan général D1 et qui passe par le centre du cercle formé par la tranche de la lentille.

Les géométries des faces avant convexe 21 et arrière concave 22 déterminent le pouvoir de correction optique de la lentille ophtalmique L1. On définit le pouvoir de correction optique d'une lentille ophtalmique correctrice par ses propriétés de réfringence sphérique, cylindrique et prismatique.

Parmi ces propriétés de réfringence, on définit tout d'abord la puissance optique sphérique comme la grandeur qui caractérise l'effet « loupe » de la lentille. Cette puissance correspond à l'inverse de la focale. Le point de la lentille où l'effet loupe est nul (c'est-à-dire, dans le cas d'une lentille ayant une puissance optique exclusivement sphérique, le point où le rayon incident arrivant perpendiculairement à la lentille et le rayon transmis ont même axe) est appelé point de centrage optique P2.

On définit par ailleurs la puissance optique cylindrique comme la grandeur qui est destinée à corriger l'astigmatisme et qui caractérise en quelque sorte l'effet de déformation de l'image selon un axe passant par le point de centrage optique P2, communément appelé axe de cylindre.

On définit enfin la puissance optique prismatique comme la grandeur qui caractérise l'effet de déviation de l'image. Cette déviation est réalisée grâce à l'inclinaison de la face avant convexe 21 de la lentille relativement à sa face arrière concave 22 au point de centrage optique P2.

La lentille ophtalmique L1 peut en outre être polarisée selon une direction de polarisation uniforme.

La lentille ophtalmique L1 est par ailleurs destinée à être détourée selon un contour prédéterminé C1 dans le plan général D1 de la lentille. Ce contour prédéterminé est généralement préalablement acquis par un opticien en fonction de la forme d'une monture de lunettes choisie par un client. Plus précisément, si cette monture est du type cerclé, l'acquisition de la forme du drageoir de chacun des deux cercles de la monture fournit la forme du contour prédéterminé C1. En revanche, si la monture est du type semi-cerclé ou percé, l'acquisition de la forme d'une lentille de présentation ou d'un gabarit associé à la monture choisie fournit la forme du contour prédéterminé C1.

### Les accessoires de blocage

Les accessoires de blocage 450 sont des organes aptes à être appliqués sur une face optique de la lentille ophtalmique L1, en l'espèce sa face avant convexe 21, pour marquer et conserver son référentiel de centrage. Ces accessoires de blocage 150 sont aussi couramment appelés gland ou encore bloc de maintien.

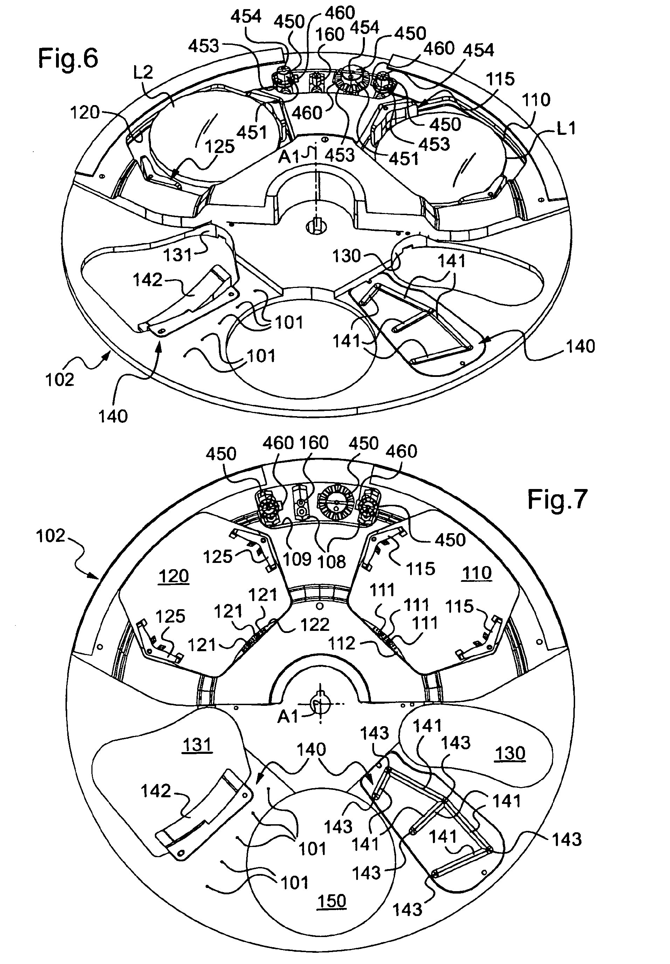

Comme le montre la figure 6, chaque accessoire de blocage 450 présente une embase 451 adaptée à être saisie par le bras de manipulation 401, et un support 453 prévu pour qu'une de ses faces, appelée face de contact 452 (figure 5), puisse s'appliquer contre la face avant convexe 21 de la lentille ophtalmique L1 en épousant sa forme. Cette face de contact 452 est ici revêtue d'un adhésif apte à coller à la lentille ophtalmique L1. L'embase 415 présente une forme de cône tronqué d'angle au sommet compris entre 5 et 20 degrés, ici 10 degrés, tandis que le support 453, qui est situé du côté de la base de ce cône, présente globalement une forme de disque épais.

L'embase 451 de chaque accessoire de blocage 450 présente en outre un alésage 454 d'axe strictement parallèle (c'est-à-dire non confondu) à l'axe du cône formé par l'embase. Cet alésage 454 de détrompage permet de déterminer l'orientation de l'accessoire de blocage 450 autour de l'axe du cône.

Parmi les accessoires de blocage 450, il peut éventuellement être prévu des accessoires de grands diamètres et des accessoires de plus petits diamètres. Quoi qu'il en soit, comme le montre la figure 5, le support 453 de chaque accessoire de blocage 450 comporte, en saillie de sa face latérale périphérique, deux languettes 460 qui sont diamétralement opposées par rapport à l'axe du cône et qui sont munies d'ouvertures 461. Ces languettes 460 et ces ouvertures 461 forment des éléments de repérage de l'accessoire de blocage 450 en ce sens que, lorsque l'accessoire est placé en position de traitement par le dispositif d'acquisition d'image 200, non seulement les images des languettes 460 munies de leurs ouvertures 461 figurent sur l'image globale acquise par le dispositif d'acquisition, mais leurs images sont en outre facilement repérables sur l'image globale grâce aux formes caractéristiques que ces languettes 460 et ces ouvertures 461 présentent.

### Le carrousel

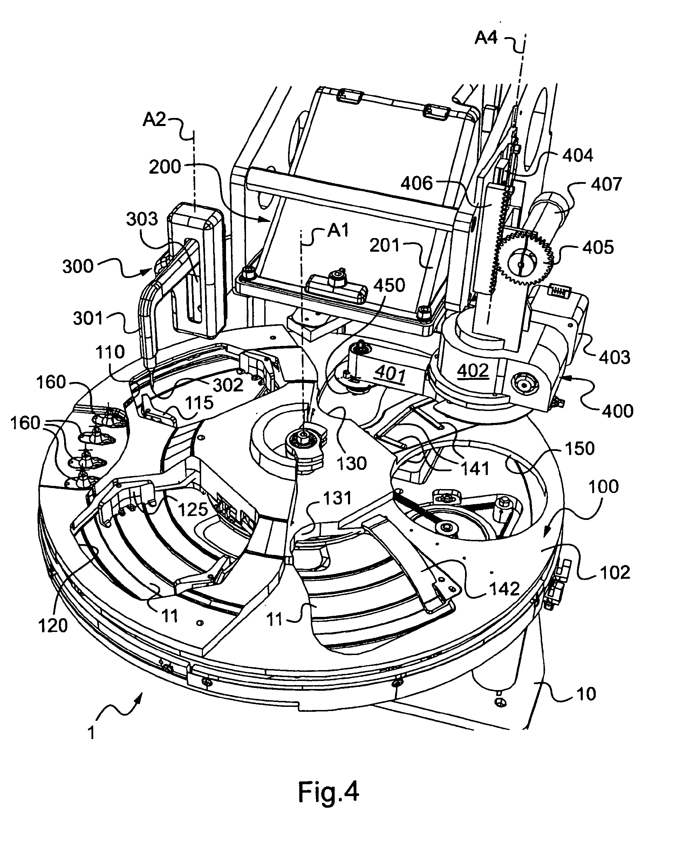

Comme représenté plus particulièrement sur les figures 4, 6 et 7, le carrousel 100 comprend :
- un plateau 102 de chargement et de déchargement de lentilles, qui est monté sur le châssis 10 commun du dispositif de préparation 1 pour tourner autour d'un axe de rotation A1 passant sensiblement par son centre et perpendiculaire au plan de ce plateau ;
- deux sièges 11 pour le chargement et le déchargement des lentilles L1, L2 ; et
- des moyens d'immobilisation 115, 125 des lentilles L1, L2 chargées sur le plateau 102.

Comme représenté sur les figures 1 et 2, l'accès au plateau 102 du carrousel 100 est restreint par une porte d'accès 501. Cette porte d'accès 501 est constituée de deux secteurs 502, 503 qui peuvent pivoter en sens opposés pour faire apparaître une zone de chargement 12 permettant le chargement et le déchargement des lentilles L1, L2.

Comme le montrent les figures 6 et 7, le plateau 102 comporte cinq évidements 110, 120, 130, 131, 150 régulièrement répartis autour de son axe de rotation A1. Deux évidements voisins forment des emplacements d'accueil 110, 120 aptes à recevoir les deux lentilles ophtalmiques L1, L2. Les évidements qui sont disposés d'un côté et de l'autre de ces emplacements d'accueil 110, 120 forment des ouvertures d'étalonnage 130, 131. Enfin, le dernier évidemment, situé entre les deux ouvertures d'étalonnage 130, 131, forme une ouverture d'actualisation 150.

Les emplacements d'accueil 110, 120 présentent chacun une forme sensiblement circulaire de diamètre légèrement supérieur au diamètre standard des lentilles à détourer (environ 70 millimètres).

Chaque emplacement d'accueil 110, 120 est associé à une pince de serrage 115, 125, les deux pinces de serrage formant les moyens d'immobilisation des lentilles (figures 3 et 7). Ces pinces sont munies de doigts articulés 116, 117 qui, vus de dessus, présentent des formes générales en V et qui sont montés à rotation sur des tiges 118, 119 (figure 3), à mi-hauteur de ces dernières. Une extrémité de chaque tige est montée à rotation autour d'un axe parallèle à l'axe de rotation A1 du plateau 102. De cette manière, les doigts articulés 116, 117 peuvent se rapprocher, en position de fermeture, ou s'écarter, en position d'ouverture. L'autre extrémité de chaque tige 118, 119 est quant à elle libre et est munie d'un patin 118A, 119A. Quelle que soient leurs positions de fermeture ou d'ouverture, les doigts articulés de chacune des pinces de serrage 115, 125 sont agencés symétriquement par rapport au centre de l'emplacement d'accueil 110, 120 correspondant. Les pinces de serrage 115, 125 sont rappelées en position de fermeture par un élément élastique tel qu'un ressort de rappel (non représenté). Par ailleurs, les pinces sont entraînées en position d'ouverture, par un mécanisme d'entraînement particulier commandé par un moteur électrique (non représenté).

Chaque emplacement d'accueil 110, 120 du plateau 102 est en outre muni d'un étrier qui, à l'instar d'une mâchoire, est adapté à se refermer sur les patins 118A, 119A des tiges 118, 119 des pinces de serrage 115, 125 lorsque ces dernières sont en position de fermeture. De cette manière, lorsqu'une lentille est saisie par les doigts articulés 116, 117 d'une pince de serrage, les deux extrémités de chaque tige sont maintenues en position, ce qui confère à cette pince de serrage une bonne rigidité.

En particulier, lorsque l'une des faces optiques 21, 22 de la lentille ophtalmique L1 est soumise à un effort appliqué par les moyens de palpage 300 ou de blocage 400 selon son axe A3 ou transversalement à cet axe, les tiges ne fléchissent pas et ne se déplacent pas, ce qui confère une précision accrue au dispositif de préparation.

Comme le montre plus particulièrement la figure 3, les doigts articulés 116, 117 de chaque pince 115 présentent, du côté de leurs faces intérieures, quatre excroissances 116A, 117A adaptées à saisir la lentille ophtalmique L1 disposée dans l'emplacement d'accueil correspondant. Les faces intérieures de ces excroissances présentent toutes une partie supérieure plane s'étendant dans un plan parallèle à l'axe A3 de la lentille à maintenir (correspondant sensiblement à l'axe de l'emplacement d'accueil), et une partie inférieure plane qui est inclinée et tournée vers le dessus du plateau 102. Les parties supérieures des faces intérieures des excroissances 116A, 117A permettent de bloquer latéralement la lentille ophtalmique L1, tandis que les parties inférieures permettent de soutenir la lentille lorsqu'un effort axial est généré sur celle-ci, selon un axe sensiblement parallèle à son axe A3. De cette manière, si un effort est appliqué sur la lentille, cette dernière conserve sa position quelle que soit la direction de cet effort.

Les pinces de serrage 115, 125 sont montées sur le plateau 102 de telle sorte que lorsque ce dernier tourne, les pinces de serrage 115, 125 tournent également avec le plateau 102.

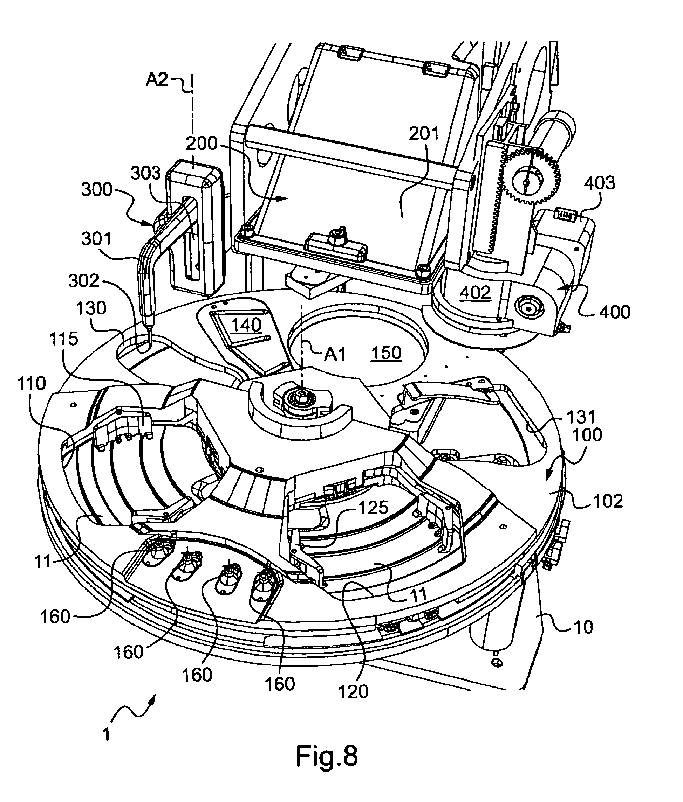

Les sièges 11 situés dans la zone de chargement 12 sont disposés légèrement en dessous du plateau 102 et présentent chacun une forme sensiblement circulaire de diamètre légèrement supérieur à celui des emplacements d'accueil 110, 120 (figure 8). Les sièges 11 sont montés fixes par rapport au châssis 10 de telle sorte que lorsque le plateau 102 est amené en position de chargement et de déchargement des lentilles, les emplacements d'accueil 110, 120 sont disposés en regard des sièges 11. Dans cette configuration de chargement et de déchargement, les lentilles ophtalmiques L1, L2 sont alors portées par les sièges 11 (les pinces de serrage sont pilotées en position d'ouverture). Dans les autres configurations du plateau 102, les lentilles sont maintenues latéralement et axialement par les pinces de serrage 115, 125 (les pinces de serrage sont pilotées en position de fermeture).

Les sièges présentent des faces supérieures de couleurs claires, par exemple blanche, et sont recouverts d'un revêtement polarisé visible par l'opticien lorsque le plateau 102 est en position de chargement et de déchargement des lentilles. Ce revêtement permet à l'opticien de disposer les lentilles sur le plateau 102 de manière que les directions de polarisation de ces lentilles soient dirigées tangentiellement au plateau. En variante, les sièges pourraient être revêtus d'une feuille électroluminescente apte à diffuser une lumière polarisée.

Comme le montre la figure 7, chaque emplacement d'accueil 110, 120 comporte, en saillie dans l'évidement qu'il forme, une lamelle 112, 122 percée d'une pluralité d'ouvertures 111, 121 (ici au nombre de neuf) d'axes parallèles à l'axe A1 du plateau 102. Ces ouvertures 111, 121 forment autant d'éléments de repérage de la position du plateau 102 sur le châssis 10, dans la mesure où elles sont repérables par les moyens de traitement 700 sur une image acquise par le dispositif d'acquisition 200. Ces lamelles 112, 122 sont fixées sur le plateau 102, si bien que les moyens de traitement 700 peuvent déduire à partir des positions des ouvertures 111, 121, la position angulaire du plateau 102 autour de son axe de rotation A1.

Les ouvertures d'étalonnage 130, 131 présentent quant à elles des formes sensiblement oblongues s'étendant selon des axes perpendiculaires à l'axe de rotation A1 du plateau 102. Ces ouvertures d'étalonnage 130, 131 sont conçues, comme cela sera décrit plus en détail par la suite, pour faciliter le repérage de la position du bras de manipulation 401 par rapport au châssis 10, avant la dépose d'un accessoire de blocage 450 sur chaque lentille L1, L2.

L'ouverture d'actualisation 150 présente quant à elle une forme circulaire de diamètre sensiblement égal au diamètre des emplacements d'accueil 110, 120. Cette ouverture d'actualisation 150 est située sur le plateau 102 à l'opposé de ces emplacements d'accueil 110, 120, de sorte que, lorsque les emplacements d'accueil sont situés dans la zone de chargement 12, cette ouverture d'actualisation 150 est disposée en regard du dispositif d'acquisition d'image 200.

Le plateau 102 comporte par ailleurs, entre ses deux emplacements d'accueil 110, 120, quatre tiges 160 qui s'étendent en saillie de la face supérieure du plateau 102 selon des axes parallèles à l'axe de rotation A1 du plateau. Ces tiges 160 sont conçues pour accueillir les accessoires de blocage 450. Plus précisément, les centres des faces de contact des accessoires de blocage 450 sont percés d'alésages aptes à être enfichés sur les tiges 160, de sorte que les accessoires de blocage 450 soient correctement maintenus sur le plateau 102.

Comme le montre la figure 7, les tiges 160 sont chacune fixées à un support 108 qui est inséré dans une ouverture 109 du plateau 102 et qui y est fixé.

Le plateau 102 porte en outre à demeure des chemins d'étalonnage 140 aptes à étalonner les moyens de palpage 300. Ces chemins d'étalonnage 140 sont disposés de part et d'autre de l'ouverture d'actualisation 150.

Plus précisément, d'un côté de cette ouverture d'actualisation 150, les chemins d'étalonnage comportent cinq rainures rectilignes 141 non parallèles et situées dans le plan du plateau 102. Ces rainures sont disposées de telle sorte que l'une des deux extrémités de chaque rainure est confondue avec l'extrémité d'une autre des rainures. L'ensemble des extrémités de ces rainures rectilignes 141 sont percées d'un alésage traversant 143 formant un élément de repérage de la position des rainures.

De l'autre côté de l'ouverture d'actualisation 150, les chemins d'étalonnage comportent une rampe 142 formée par un pan incliné par rapport à l'axe A1 du plateau 102, et par deux pans horizontaux, situés aux extrémités du pan incliné et s'étendant dans des plans orthogonaux à l'axe de rotation A1 du plateau.

Cinq trous traversants 101, formant des éléments de repérage de la position du plateau 102, sont disposés à côté de cette rampe 142, selon une droite perpendiculaire à l'axe de rotation A1. Ces cinq trous sont repérables par les moyens de traitement 700 sur une image acquise par le dispositif d'acquisition 200. Ils forment donc des éléments de repérage de la position du plateau 102 sur le châssis 10. Leurs positions permettent en particulier aux moyens de traitement 700 de déterminer la position de l'axe de rotation A1 du plateau 102 par rapport au châssis 10.

### Le dispositif d'acquisition d'images

Le dispositif d'acquisition d'images 200 (figure 4) possède deux fonctions principales. Sa première fonction consiste à mesurer des puissances optiques locales de la lentille en des points remarquables de celle-ci tels que le point de centrage optique P2.

Sa deuxième fonction consiste à détecter et localiser des caractéristiques de centrage ou repérage de la lentille afin d'établir ou positionner convenablement la lentille dans un référentiel global connu du dispositif. En effet, lors du montage d'une lentille ophtalmique sur une monture, il est important pour le confort visuel du porteur de s'assurer du positionnement convenable de la lentille par rapport à l'oeil dont elle corrige un défaut de réfraction ou d'accommodation.

Globalement, une lentille ophtalmique est centrée lorsque, d'une part, le point de centrage optique (pour les lentilles unifocales ou multifocales à discontinuité de puissance) ou le centre de référence (pour les lentilles progressives) de la lentille ophtalmique prévu lors de la conception et, d'autre part, le centre pupillaire de l'oeil se superposent ou, autrement formulé, lorsque la ligne de regard passe par le point de centrage optique P2 ou le centre de référence de la lentille ophtalmique. Le centrage résulte donc du rapprochement de deux données géométrico-optiques : la morphologie pupillaire du porteur et la position sur la lentille du point de centrage optique ou du centre de référence. La lentille doit aussi, pour exercer la fonction optique voulue, être convenablement orientée autour de son axe optique.

Le dispositif d'acquisition d'images 200 peut être de tout type. La mesure optique globale peut être obtenue par déflectrométrie (du type Hartmann, moiré, etc.), par interférométrie, par propagation d'ondes, etc. L'interface utilisateur peut alors afficher non seulement le point de centrage optique ou de référence, mais aussi des cartes de puissances et/ou d'axage de la lentille pour obtenir une mesure globale d'une ou plusieurs de ses caractéristiques optiques en une pluralité de points sur la majeure partie de son étendue.

Généralement, le dispositif d'acquisition d'images 200 comporte, de part et d'autre du plateau 102, des moyens d'éclairage 201 polarisés et des moyens d'imagerie (non représentés) pilotés par les moyens de traitement 700. Ici, les moyens d'éclairage 201 comportent une source de lumière associée à une lentille de collimation. Les moyens d'imagerie comportent quant à eux des moyens de capture d'image (tels qu'une caméra) et, entre ces moyens de capture d'image et le plateau 102, une plaque Hartmann qui est adaptée à afficher une matrice de points alignés, et un écran dépoli sur laquelle apparaît une image de la matrice de points, appelée image source. Ainsi, lorsqu'une lentille ophtalmique L1, L2 est disposée en position de traitement par le dispositif d'acquisition d'images 200, c'est-à-dire entre les moyens d'éclairage 201 et les moyens d'imagerie, les moyens de capture d'image voient l'image source déformée par la lentille. L'image capturée, une fois comparée à l'image source (non déformée), permet de déterminer les puissances optiques locales de la lentille et de détecter et localiser les caractéristiques de centrage ou de repérage de la lentille.

Comme le montre la figure 10, apparaissent sur l'image capturée 601 :
- l'image 602 de l'emplacement d'accueil 110, 120 de la lentille ophtalmique analysée, et l'image 606 de ses éléments de repérage 111, 121 ;
- l'image 603 de cette lentille ophtalmique ;
- l'image 604 du bras de manipulation 401 (et l'image 607 de ses éléments de repérage qui seront décrits dans la suite du texte) ; et
- l'image 605 de la pince de maintien 115, 125 de la lentille ophtalmique.

Un exemple de dispositif d'acquisition d'images 200 est détaillé dans la demande de brevet déposée le 3 décembre 2004 sous le n° FR 2 878 972 au nom de la demanderesse.

### Les moyens de palpage

Comme représenté sur la figure 4, les moyens de palpage 300 comportent un premier bras de palpage 301 disposé au-dessus du plateau 102. Ils comportent en outre un second bras de palpage qui est disposé en dessous du plateau 102, en regard du premier bras de palpage 301, et qui n'apparaît pas sur les figures. Ces deux bras de palpage sont agencés pour palper conjointement (ou en variante, indépendamment) les deux faces optiques 21, 22 des lentilles ophtalmiques L1, L2.

A cet effet, chaque bras de palpage 301 comporte une branche coudée avec une première partie qui s'étend dans un plan parallèle au plan du plateau 102 et dont l'extrémité est raccordée à des moyens d'actionnement 303, et une seconde partie qui s'étend selon un axe parallèle à l'axe de rotation A1 du plateau 102 et dont l'extrémité libre forme une extrémité de palpage 302. Les deux extrémités de palpage 302 des deux bras de palpage 301 pointent l'une vers l'autre de manière à pouvoir être amenées en contact des faces optiques avants et arrières des lentilles ophtalmiques L1, L2. Sur chacune des deux extrémités de palpage 302 sont montés des palpeurs mécaniques connus en eux-mêmes, opérant par simple contact mécanique.

L'un et/ou l'autre des deux bras de palpage 301, en l'espèce ici les deux, sont montés mobiles en translation selon des axes parallèles à l'axe de rotation A1 du plateau 102. Ces translations permettent d'écarter ou de rapprocher les deux extrémités de palpage 302. Les translations des bras de palpage 301 sont commandées indépendamment l'une de l'autre par des moteurs-codeurs électriques (non représentés).

L'un et/ou l'autre des deux bras de palpage 301, en l'espèce ici les deux, sont montés mobiles en rotation autour d'un même axe de pivotement A2 qui est sensiblement parallèle à l'axe de rotation A1 du plateau 102. Les rotations des bras de palpage 301 sont solidaires et sont commandées par un même moteur électrique (non représenté). Ces rotations, combinées à celle du plateau 102, permettent de positionner les extrémités de palpage 302 en regard d'une pluralité de points du plateau 102. Plus précisément, lorsque le plateau 102 est en position de traitement par les moyens de palpage 300, c'est-à-dire lorsque l'un des emplacements d'accueil 110, 120 est situé entre les deux bras de palpage 301, les rotations simultanées et combinées des bras de palpage 301 et du plateau 102 permettent de palper l'ensemble des surfaces des faces optiques de la lentille ophtalmique maintenue dans cet emplacement d'accueil.

### Les moyens de blocage

On définit un point de blocage P1 sur chaque lentille ophtalmique L1, L2 au niveau duquel sera posé un des accessoires de blocage 450. Ce point de blocage P1 est choisi comme étant confondu avec un point appelé centre boxing, bien connu de l'homme du métier. Pour rappel, ce centre boxing est le point d'intersection des diagonales du rectangle horizontal dans lequel est inscrit le contour prédéterminé C1 de la lentille dans la configuration du porté (définissant l'horizontalité). Ce centre boxing est déterminé par le dispositif d'acquisition d'images 200 en fonction des caractéristiques de repérage mesurées de la lentille, des paramètres de morphologie du porteur et des paramètres de géométrie de la monture choisie. Pour une des deux faces optiques de la lentille, en l'espèce la face avant convexe, on définit un axe de blocage, appelé axe boxing comme étant l'axe sensiblement normal à la surface de la face concernée de cette lentille et passant par le centre boxing.

Les moyens de blocage 400 sont conçus et agencés pour réaliser la saisie, le transport et l'accostage d'un des accessoires de blocage 450 contre l'une des deux faces optiques de ladite lentille (en l'espèce la face avant convexe). Cet accessoire de blocage 450 est appliqué sur la face avant convexe en étant amené en translation suivant l'axe de blocage de la lentille, avec un maintien rigide durant cette translation.

Comme représenté plus particulièrement sur les figures 4 et 5, les moyens de blocage 400 comportent, outre le bras de manipulation 401, un corps supérieur 402 de forme sensiblement cylindrique et d'axe A4 sensiblement parallèle à l'axe de rotation A1 du plateau 102.

Ce corps supérieur 402 est déplaçable en translation le long d'un rail de guidage 404 qui est fixé au châssis 10 selon une direction parallèle à l'axe A4. Le déplacement en translation le long de l'axe A4 est réalisé au moyen d'un système mécanique comportant un pignon 405 qui engrène avec une crémaillère 406. La crémaillère 406 est à cet effet fixée au châssis 10, parallèlement au rail de guidage 404. Le pignon 405 est quant à lui solidarisé à un arbre de sortie d'un moteur électrique 407 fixé au corps supérieur 402 et piloté par les moyens de traitement 700.

Le bras de manipulation 401 présente une partie cylindrique 421 centrée sur l'axe A4 et disposée en dessous du corps supérieur 402, un corps allongé 420 rattaché à la face latérale de la partie cylindrique 421, et une tête d'accueil 410.

Le corps allongé 420 est de forme parallélépipédique et s'étend transversalement à l'axe A4 du corps supérieur 402, c'est-à-dire parallèlement au plan du plateau 102.

Le partie cylindrique 421 du bras de manipulation 401 est montée rotative sur le corps supérieur 402 autour de l'axe A4, ce qui permet au bras de manipulation 401 de pivoter autour de l'axe A4. Cette rotation est réalisée au moyen d'un jeu d'engrenages (non représenté) et d'un moteur électrique pas-à-pas 403 piloté par les moyens de traitement 700. Combinée à la rotation du plateau 102, elle permet de positionner la tête d'accueil 410 à la position voulue par rapport au plateau 102.

En variante, le bras de manipulation pourrait être monté sur le châssis avec deux mobilités de translation selon des axes parallèles au plan du plateau. Il permettrait ainsi de positionner la tête d'accueil à la position voulue par rapport au plateau sans que ce dernier ne change de position.

La tête d'accueil 410 comporte ici un manchon cylindrique 414 qui est engagé dans un alésage réalisé à l'extrémité libre du corps allongé 420. Ce manchon s'étend verticalement selon un axe A5, sensiblement parallèle à l'axe A4, vers le bas du dispositif c'est-à-dire vers le plateau 102. Ce manchon cylindrique 414 est piloté en position angulaire autour de l'axe A5 par un dispositif qui est disposé à l'intérieur du corps allongé 420 et qui comporte une courroie et un moteur électrique pas-à-pas piloté par les moyens de traitement 700.

La tête d'accueil 410 comporte en outre, du côté de l'extrémité basse du manchon cylindrique 414, une collerette 415 circulaire de diamètre environ égal au double du diamètre du manchon cylindrique 414, ainsi qu'un élément de saisie 416 qui constitue un moyen de préhension et de pose d'un des accessoires de blocage 450 sur la lentille.

La collerette 415 comporte en particulier deux fenêtres 413 diamétralement opposées qui, lorsque le bras de manipulation 401 est en position de traitement par le dispositif d'acquisition d'images 200 (c'est-à-dire lorsque la tête d'accueil 410 du bras est située entre les moyens d'éclairage 201 et les moyens d'imagerie du dispositif d'acquisition d'images 200), sont visibles sur l'image capturée par le dispositif d'acquisition. Ces fenêtres 413 sont plus précisément écartées l'une de l'autre d'une distance sensiblement égale à la distance séparant les languettes 460 de chaque accessoire de blocage 450. Ainsi, lorsqu'un accessoire de blocage est saisi par le bras de manipulation 401 et qu'il présente une position convenable par rapport au bras de manipulation 401, les languettes 460 sont visibles au travers des fenêtres 413. Les moyens de traitement 700 peuvent ainsi s'assurer, à partir de l'image capturée, non seulement de la présence d'un accessoire de blocage sur le bras, mais aussi du positionnement correct de cet accessoire sur le bras.

La collerette 415 comporte en outre deux paires de petites ouvertures circulaires 411, 412 qui forment des éléments de repérage de la position du bras de manipulation 401 et de sa tête d'accueil 410 lorsqu'aucun accessoire de blocage 450 n'est saisi par le bras. Les deux ouvertures 411, 412 de chaque paire sont disposées l'une à côté de l'autre, suivant un même rayon de la collerette 415. Les deux rayons des deux paires d'ouvertures sont orthogonaux l'un par rapport à l'autre. Les ouvertures 412 de l'une des paires d'ouvertures sont en outre plus petites que les ouvertures 411 de l'autre des paires, de sorte que leurs images sur l'image capturée présentent des formes dissociables par les moyens de traitement 700.

L'élément de saisie 416 possède un logement (non représenté) de réception de l'embase 451 d'un des accessoires de blocage 450. Ce logement présente une forme conique divergente vers son embouchure. L'angle au sommet de ce cône est égal à l'angle au sommet des embases coniques des accessoires de blocage 450, de sorte qu'une fois l'embase saisie par le bras de manipulation 401, cette embase épouse parfaitement la forme du logement. Pour exercer un maintien temporaire de l'accessoire de blocage dans le logement, ce dernier est pourvu d'un ressort de serrage de l'embase ou, en variante, d'un aimant permanent coopérant avec un insert métallique équipant l'embase de l'accessoire de blocage 450.

L'élément de saisie 416 de la tête d'accueil 410 est par ailleurs raccordé au corps allongé 420 du bras de manipulation 401 (ou au manchon cylindrique 414) par une liaison rotule présentant deux mobilités de rotation libres autour de deux axes perpendiculaires l'un par rapport à l'autre et perpendiculaires à l'axe A5. Cette liaison rotule est conçue de manière que le point de pivotement P3 de l'élément de saisie 416 autour de ces deux axes est situé, lorsqu'un accessoire de blocage 450 est saisi, au niveau du centre de la face de contact 452 de cet accessoire. Ainsi, quelle que soit l'orientation de l'élément de saisie 416 autour de ces deux axes, le centre de la face de contact présente une position invariable. Par conséquent, la position de l'accessoire de blocage 450 sur la lentille n'est pas fonction de l'orientation de l'accessoire de blocage autour de ces deux axes.

Le dispositif de blocage possède par ailleurs des moyens de mise au repos (non représentés) du bras de manipulation 401. Ces moyens de mise au repos peuvent être du type de ceux employés pour la mise au repos d'un bras de tourne-disque, avec un siège de retenue en position haute du bras sur laquelle le bras vient en appui après avoir pivoter en position haute jusqu'à une position angulaire de repos. Il est également prévu une bride d'immobilisation du bras en position de repos, en appui sur la butée haute.

### Les moyens de traitement

Les moyens de traitement 700 consistent ici en une carte électronique conçue pour piloter en coordination les différents organes du dispositif de préparation 1, tels que le plateau 102, le dispositif d'acquisition d'images 200, les moyens de palpage 300 et les moyens de blocage 400, conformément au procédé de traitement automatisé qui sera exposé ultérieurement.

Les moyens de traitement 700 comprennent par exemple de façon classique une carte mère, un microprocesseur, une mémoire vive et une mémoire de masse permanente. La mémoire de masse contient un programme d'exécution du procédé automatisé de préparation au montage selon l'invention qui sera décrit plus loin. Cette mémoire de masse est de préférence réinscriptible et est avantageusement amovible pour permettre son remplacement rapide ou sa programmation sur un ordinateur distant via une interface de norme standard. Cette mémoire de masse est en particulier prévue pour mémoriser le contour prédéterminé C1, les données mesurées par les moyens de palpage, un fichier représentatif de la forme des moyens d'étalonnage, et les formes et positions des éléments de repérage respectivement du plateau 102 et du bras de manipulation 401, relativement à l'axe de rotation A1 du plateau et à l'axe de rotation A4 du bras de manipulation.

Le dispositif de préparation 1 comporte plusieurs prises informatiques 701 pour permettre aux moyens de traitement 700 d'envoyer et de recevoir des données. Il comporte en particulier une prise destinée à être branchée sur un dispositif d'usinage des lentilles ophtalmiques L1, L2.

### Procédé

Le dispositif de préparation au montage qui vient d'être décrit peut être utilisé pour la mise en oeuvre d'un procédé de préparation qui va maintenant être décrit.

Ici, le traitement des lentilles est réalisé par job. Le terme "job", couramment utilisé dans le milieu de l'optique ophtalmique, recouvre une paire de lentilles ophtalmiques L1, L2 destinées à être assemblées à une même monture pour équiper un porteur.

Le traitement d'un job comporte principalement cinq opérations dites de chargement, de centrage, de palpage, de blocage, et de déchargement, elles-mêmes subdivisibles en plusieurs étapes.

### Etape préliminaire : Saisie ou transmission des données de commande du job

Afin de réaliser un montage optique correct, au cours d'une étape préliminaire, l'opticien équipe le porteur de la monture choisie et effectue plusieurs mesures morphologiques sur le porteur à l'aide d'un appareil appelé « pupillomètre » ou de tout autre appareil de mesure ou d'imagerie. L'opticien relève ainsi en particulier l'écart interpupillaire qui représente la distance séparant les deux pupilles ou les demi-écarts interpupillaires qui représentent les distances séparant chaque pupille et le centre du nez du porteur. L'opticien relève aussi la hauteur pupillaire qui représente la distance, prise à la verticale de chaque pupille, séparant la pupille et le bord inférieur des cercles de la monture portée par le porteur. Cette hauteur pupillaire peut être mesurée à l'aide d'un réglet, ou encore au moyen d'un système numérique adapté à acquérir une image du visage du porteur équipé de sa monture et à traiter cette image.

D'autre part, l'opticien ou opérateur enregistre, dans la mémoire de masse des moyens de traitement 700, les données de commande optiques constituées par les paramètres de prescription relatifs au porteur auquel est destiné le job en préparation. Il s'agit en particulier des puissances optiques sphériques, cylindriques et prismatiques, ainsi que des axes de cylindre et de prisme, et du caractère polarisé ou non des lentilles en préparation.

Enfin, les données de commandes géométriques constituées par les informations représentatives de la géométrie du contour prédéterminé C1 (correspondant à la forme de la monture choisie) sont également enregistrées dans la mémoire de masse des moyens de traitement 700. La forme du contour prédéterminé C1 de chaque lentille est alors obtenue à l'aide d'un appareil de lecture de contours (non représenté) spécialement conçu pour lire le contour interne des cercles de la monture ou le contour d'un gabarit de lentille ou encore le contour d'une lentille de présentation fournie avec la monture choisie. Cet appareil de lecture possède des moyens de communication avec les moyens de traitement 700 afin de transmettre à ces derniers les données géométriques du contour prédéterminé C1 de chaque lentille. Un tel appareil de lecture de contours est par exemple décrit et représenté dans le document FR 2 890 189 appartenant à la demanderesse.

On peut également prévoir en variante que la forme souhaitée soit obtenue par un fichier électronique préenregistré ou fourni par le fabriquant.

### Opération de chargement

### Etape 1 : En attente d'un job

En référence à la figure 8, lorsque le dispositif de préparation 1 n'est pas utilisé, les moyens de traitement 700 pilotent le plateau 102 en pivotement autour de son axe de rotation A1 de manière à disposer l'ouverture d'actualisation 150 en position de traitement par le dispositif d'acquisition d'images 200. De cette manière, les emplacements d'accueil 110, 120 du plateau sont disposés dans la zone de chargement 12, qui reste fermée par la porte d'accès 501. Comme rappelé ci-avant, dans cette configuration de chargement, les emplacements d'accueil 110, 120 sont situés au-dessus des sièges 11. Les pinces de serrage 115, 125 associées à ces emplacements d'accueil sont quant à elles en position de fermeture.

Au cours de cette étape, les moyens de capture d'images sont pilotés par les moyens de traitement 700 pour prendre à intervalles réguliers, par exemple toutes les minutes, un cliché de l'image source affichée par les moyens d'imagerie.

### Etape 2 : Ouverture de la porte d'accès

Initialement, la porte d'accès 501 est fermée. La règle est en effet que la porte d'accès reste généralement fermée afin de protéger les organes internes du dispositif de préparation 1, en particulier son plateau 102. A la demande de l'opticien (par exemple lorsque ce dernier touche l'écran tactile 600), l'ouverture de la porte d'accès 501 est autorisée par les moyens de traitement 700. Les deux secteurs 502, 503 de la porte d'accès 501 s'écartent alors l'un de l'autre en pivotant pour laisser apparaître la zone de chargement 12. Cette ouverture est automatiquement accompagnée de l'ouverture des pinces de serrage 115, 125.

Si, pendant une durée prédéterminée (qui peut être paramétrée par l'opticien), le dispositif de préparation reste inutilisé, les moyens de traitement 700 commandent la fermeture automatique de la porte d'accès 501 et des pinces de serrage 115, 125.

### Etape 3 : Chargement des lentilles et des accessoires de blocage

En pratique, les deux lentilles ophtalmiques L1, L2 du job sont déposées manuellement par l'opticien sur les deux sièges 11 accessibles au travers de la porte d'accès 501 et des emplacements d'accueil 110, 120 du plateau 102. Bien entendu, un chargement automatisé des lentilles peut également être envisagé.

Si les lentilles ophtalmiques L1, L2 du job ne sont pas polarisées, l'orientation des lentilles autour de leurs axes A3 (figure 3) est indifférente. En revanche, si elles sont polarisées, l'opticien remarque que l'orientation des lentilles fait varier la clarté des images des sièges 11 vus au travers des lentilles L1, L2. L'opticien positionne alors chaque lentille L1, L2 de manière que la clarté de cette image soit maximale. De cette manière, il s'assure que les directions de polarisation des lentilles et des revêtements polarisés des sièges 11 sont parallèles. Les directions de polarisation des moyens d'imagerie et des lentilles ophtalmiques L1, L2 seront donc sensiblement parallèles lorsque les lentilles seront amenées par le plateau 102 en position de traitement par le dispositif d'acquisition d'images 200. Les clichés des lentilles seront donc lumineux, si bien que les moyens de traitement 700 pourront facilement analyser ces clichés.

Deux ou quatre accessoires de blocage 450 sont ensuite placés par l'opticien sur les tiges 160 (figure 4) du plateau 102.

Lorsque l'opticien a positionné les deux lentilles et les accessoires dans le carrousel 100, il commande la fermeture de la porte d'accès 501. Les pinces de serrage 115, 125 sont alors automatiquement commandées en position de fermeture pour que leurs doigts articulés enserrent les lentilles ophtalmiques L1, L2.

### Opération de centrage

### Etape 1 : Acquisition d'une image d'une première lentille du job

Les moyens de traitement 700 pilotent alors le plateau 102 en pivotement pour placer l'emplacement d'accueil 110 de la première lentille L1 en position de traitement par le dispositif d'acquisition d'images 200. Les moyens de capture d'images prennent alors un nouveau cliché de l'image source déformée par la lentille.

Les moyens de traitement 700 comparent alors ce nouveau cliché avec le dernier cliché de l'image source non déformé pris lors de l'étape 1 de l'opération de chargement. Cette comparaison permet de calculer les données de puissances optiques, l'orientation des axes de cylindre et de prisme, et les données relatives au référentiel de repérage de la lentille (point de centrage optique P2 et orientation de la lentille). Ces données sont alors mémorisées par la mémoire de masse.

On comprend que la position de l'image de chaque point de la matrice de points de l'image source doit être précisément acquise sur chaque cliché de manière que le calcul présente un résultat juste. Toutefois, il arrive que l'image source affichée par les moyens d'imagerie bouge au cours du temps, de sorte que les points de sa matrice de points changent de position. La durée passée entre les moments où ont été pris le dernier cliché et le nouveau cliché est ici réduite, ce qui limite les changements de position des points.

Pour affiner encore le calcul, les moyens de traitement 700 repèrent, sur le nouveau cliché, les points de la matrice de points situés dans une zone Z4 qui est disposée à l'extérieur de l'image 603 de la lentille (figure 10), mais à l'intérieur de l'image 602 de l'emplacement d'accueil 110. Sur ce nouveau cliché, les images de ces points ne sont pas déviées par la lentille ; elles sont donc sensées présenter des positions identiques à celles des points correspondant du dernier cliché. Si, la position de la matrice de points évolue au cours du temps, elle évolue de telle sorte que la matrice toute entière se translate ou pivote légèrement. En comparant les positions de ces points, les moyens de traitement 700 peuvent déterminer si l'image source a bougé entre la prise des deux clichés, et, si c'est le cas, ils peuvent ajuster la position de l'ensemble des points du dernier cliché avant de comparer les deux clichés.

La précision du calcul de puissances optiques dépend en outre d'une donnée constituée par la distance entre les moyens de capture d'images et la face arrière concave 22 de la lentille ophtalmique L1. Cette distance présente généralement une valeur moyenne mémorisée dans la mémoire de masse. Cette valeur moyenne est ici corrigée pour chaque lentille en fonction de la hauteur du centre de la face arrière concave 22 de la lentille ophtalmique L1. Cette hauteur sera à cet effet acquise lors de l'opération de palpage de la lentille.

Par ailleurs, l'acquisition des caractéristiques de repérage indiquées ci-dessus permet aux moyens de traitement 700 de déterminer la position que doit présenter le contour prédéterminé C1 sur la lentille ophtalmique L1 pour que cette dernière soit correctement centrée. Les moyens de traitement 700 en déduisent alors la position exacte du point de blocage P1 de la lentille L1 (centre boxing).

Enfin, les moyens de traitement 700 repèrent, au moyen des positions sur le nouveau cliché des images des ouvertures 111 de cet emplacement d'accueil 110, la position exacte du plateau 102 et de son emplacement d'accueil 110 lors de l'opération de centrage. Cette position est alors mémorisée dans la mémoire de masse.

### Etape 2 : Acquisition d'une image d'une seconde lentille du job

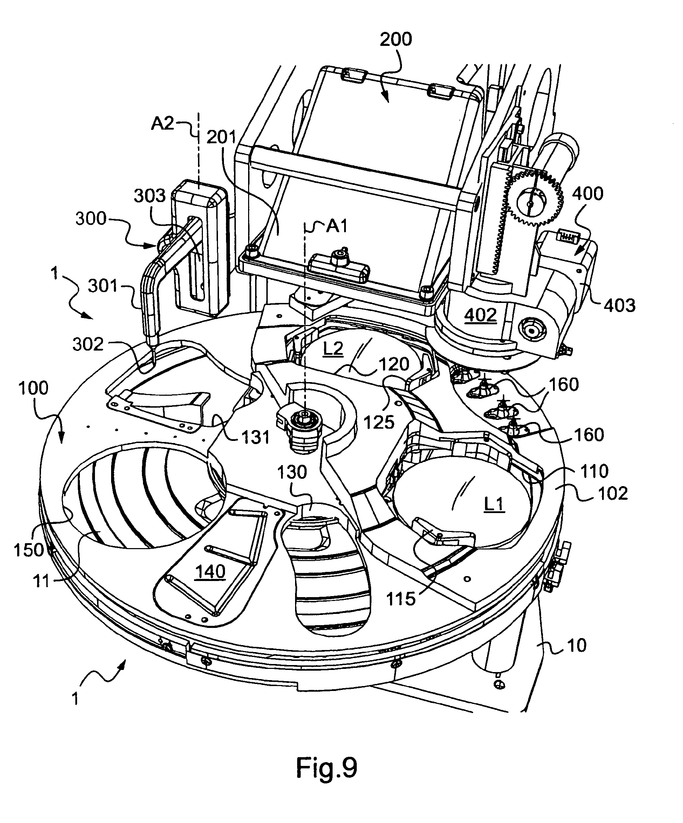

Les moyens de traitement 700 procèdent ensuite de la même manière pour calculer les données de puissances optiques et les données relatives au référentiel de repérage de la seconde lentille ophtalmique L2, en amenant le deuxième emplacement d'accueil 120 en position de traitement par le dispositif d'acquisition d'images 200 (figure 9). Ici également, la position exacte du plateau 102 et de cet emplacement d'accueil 120 est acquise et mémorisée dans la mémoire de masse.

### Etape 3 : Confrontation des caractéristiques du job par rapport aux données de commande

Les moyens de traitement 700 procèdent à l'examen de validation, automatique ou assisté, des caractéristiques des deux lentilles L1, L2 du job. Cet examen de validation consiste en une double vérification, avec :
- une vérification de la conformité des caractéristiques mesurées sur chaque lentille du job par rapport aux données de commande saisies par l'opticien, et
- d'autre part, un contrôle de la cohérence d'ensemble des caractéristiques des deux lentilles considérées en tant que job, c'est-à-dire en fonction de leur appartenance à une même paire de lunettes, avec en particulier la simulation du montage des deux lentilles sur la monture choisie et la vérification que ce montage est possible.

Les caractéristiques pour lesquelles chaque lentille est individuellement validée sont en particulier :
- type de lentille : unifocale, progressive, double ou triples foyers, etc.
- puissances sphérique, prismatique, cylindrique,
- addition de puissance(s) pour les lentilles progressives
- axes de cylindre et de prisme,
- caractère teinté ou non de la lentille.

A partir des informations représentatives des paramètres propres à la morphologie du porteur, notamment les demi-écarts pupillaires et les hauteurs pupillaires, et des informations représentatives du contour de la monture choisie, acquises lors de l'étape préliminaire précédemment décrite, les moyens de traitement 700 élaborent une image vidéo qui est visualisée sur l'écran 600. Par conséquent, sur cet écran, on verra notamment, à la même échelle, le contour de la monture et celui des lentilles non détourées, avec leurs caractéristiques particulières, notamment leurs centres boxing. L'opticien pourra alors valider ou non le centrage des lentilles.

Les accessoires de blocage 450 engagés sur les tiges 160 du plateau 102 présentent l'un ou l'autre de deux diamètres standards. On vérifie alors également, pour chaque lentille L1, L2, la présence d'un accessoire de blocage 450 dont le diamètre est compatible avec le contour prédéterminé C1, avec la finition souhaitée et avec le revêtement plus ou moins glissant de la lentille L1, L2. Les moyens de traitement 700 vérifient en particulier que la pose de l'accessoire de blocage 450 au centre boxing sera telle qu'une distance minimale sera respectée entre le contour prédéterminé C1 et la paroi extérieure de l'accessoire de blocage 450. L'accessoire de blocage ne doit en effet en aucun cas être trop proche du contour prédéterminé C1 afin d'éviter, lors du détourage de la lentille correspondante, que l'accessoire ne soit lui aussi usiné.

En cas d'incompatibilité, les moyens de traitement 700 décalent le point de blocage P1 par rapport au centre boxing jusqu'à trouver une position satisfaisante (répondant au critère énoncé ci-dessus). Si aucune position satisfaisante n'est trouvée, un message d'erreur s'affiche sur l'écran 600 pour solliciter le chargement d'un accessoire de blocage spécial de petites dimensions.

### Opération de palpage

### Etape 0 : Etalonnage des moyens de palpage

Cet étalonnage est généralement réalisé à intervalles réguliers lors de l'étape 1 de l'opération de chargement, c'est-à-dire lorsque le dispositif de préparation 1 est inutilisé.

Les moyens de traitement 700 pilotent alors le plateau 102 en pivotement autour de son axe de rotation A1 pour placer les rainures rectilignes 141 en position de traitement par le dispositif d'acquisition d'images 200. Dans cette position, le dispositif d'acquisition d'images 200 prend un cliché des chemins d'étalonnage 140 pour que les moyens de traitement 700 puissent repérer, sur ce cliché, les positions des alésages traversants 143 des rainures rectilignes 141. Les moyens de traitement 700 comparent alors ces positions avec les données du fichier représentatif de la forme des chemins d'étalonnage 140 enregistré dans la mémoire de masse. Cette comparaison permet aux moyens de traitement 700 d'ajuster les données mémorisées dans le fichier.

Puis, les moyens de traitement 700 pilotent le plateau 102 en pivotement pour placer les rainures rectilignes 141 en position de traitement par les moyens de palpage 300. Ils pilotent ensuite le moteur-codeur d'actionnement en translation du bras de palpage 301 pour que l'extrémité de palpage 302 du bras entre en contact avec le plateau 102. Ce moteur-codeur exerce alors un couple constant pour appliquer en permanence au bras de palpage 301 un effort de rappel contre le plateau 102. Les moyens de traitement 700 pilotent ensuite simultanément, de manière combinée et selon une fonction de consigne élaborée à partir du fichier, les pivotements du plateau 102 et du bras de palpage 301 pour palper les cinq rainures rectilignes 141. Ce palpage permet en particulier d'acquérir les positions d'une pluralité de points appartenant à chacune des rainures rectilignes 141, de comparer ces positions acquises avec les positions des alésages traversants 143 (mémorisées dans la mémoire de masse), et de déduire de cette comparaison des paramètres d'étalonnage de la position du bras de palpage 301.

Ces paramètres d'étalonnage sont ici les suivants :
- une première distance de correction entre un entraxe théorique mémorisé dans le fichier et un entraxe réel séparant les axes de rotation A1, A2 du plateau 102 et du bras de palpage 301 ;
- un angle de décalage entre une position angulaire de consigne et une position angulaire réelle du bras de palpage 301 autour de son axe de rotation A2 ; et
- une seconde distance de correction entre un rayon théorique mémorisé dans le fichier et un rayon réel séparant l'axe de rotation A2 du bras de palpage 301 et son extrémité de palpage 302.

Une fois ces paramètres déterminés, il convient d'étalonner la translation du bras de palpage 301 le long de son axe de rotation A2. Pour ce faire, après avoir ramené le bras de palpage 301 en position haute, les moyens de traitement 700 pilotent le plateau 102 en pivotement autour de son axe de rotation A1 pour placer la rampe 142 en position de traitement par les moyens de palpage 300. Ils pilotent ensuite le moteur-codeur d'actionnement en translation de chaque bras de palpage 301 pour que les extrémités de palpage 302 des bras entrent en contact avec la rampe 142. Ces moteurs-codeurs exercent alors des couples constants pour appliquer en permanence sur les bras de palpage 301 des efforts de rappel contre la rampe 142. Les moyens de traitement 700 pilotent ensuite, selon une fonction de consigne préalablement élaborée, le pivotement du plateau 102 pour que les extrémités de palpage 302 des bras palpent selon une même trajectoire les deux faces des pans horizontaux et du pan incliné de la rampe 142. Ce palpage permet en particulier d'étalonner les moteurs-codeurs d'actionnement en translation des bras de palpage 301, de sorte que les moyens de traitement 700 puissent ensuite acquérir avec précision les hauteurs des extrémités de palpage 302 par rapport au plateau 102 lors du palpage des faces optiques des lentilles L1, L2.

### Etape 1 : Palpage du contour prédéterminé de la première lentille

Le bras de palpage 301 étant en position haute, les moyens de traitement 700 pilotent le plateau 102 en pivotement autour de son axe de rotation A1 pour placer le premier emplacement d'accueil 110 de la première lentille L1 en regard des moyens de palpage 300.

Les extrémités de palpage 302 des bras de palpage 301 effectuent ensuite le palpage des faces optiques de la lentille ophtalmique L1 selon le contour prédéterminé C1, dont la forme et la position dans le plan D1 de la lentille ont été précédemment acquises. On définit ici les contours 3D avant et arrière comme les courbes qui appartiennent respectivement aux faces avant et arrière de la lentille et dont les projections dans le plan D1 de la lentille sont confondues avec le contour prédéterminé C1. L'objectif de cette étape est donc de déterminer les coordonnées spatiales d'une pluralité de points de ces contours 3D avant et arrière.

Dans cette optique, les moyens de traitement 700 pilotent les moteurs d'actionnement en translation des bras de palpage 301 pour que, d'une part, les extrémités de palpage 302 entrent en contact avec les faces avant et arrière de la lentille, et pour que, d'autre part, les moteurs exercent un couple constant de manière à appliquer en permanence un effort de rappel des bras de palpage 301 sur la lentille ophtalmique L1. Les moyens de traitement 700 pilotent ensuite, de manière combinée et selon une fonction de consigne élaborée à partir de la forme et de la position du contour prédéterminé C1, les pivotements du plateau 102 et des bras de palpage 301 pour que les extrémités de palpage 302 palpent cette lentille selon les contours 3D avant et arrière. Ils acquièrent ainsi les coordonnées d'une pluralité de points des contours 3D avant et arrière, qui sont caractéristiques des formes de ces contours.

Plus précisément, le palpage est réalisé de manière que les bras de palpage 301 n'entrent jamais en contact avec la pince de serrage 115 de la lentille ophtalmique L1. A cet effet, préalablement au palpage de la lentille, les moyens de traitement détectent les zones de conflit Z1, Z2 (figure 3) dans chacune desquelles les bras de palpage 301 risquent d'entrer en conflit avec la pince de maintien 115. Ces zones peuvent être prédéterminées et mémorisées dans la mémoire de masse, ou peuvent être déterminées lors de l'opération de centrage, à partir du nouveau cliché sur lequel apparaît l'image de la pince de serrage.

Quoi qu'il en soit, les moyens de traitement 700 identifient ici la partie C10 du contour prédéterminé C1 qui est située en dehors des zones de conflit Z1, Z2 et celle C20 qui est située dans l'une des deux zones de conflit. Le pilotage dans le plan D1 des bras de palpage est alors réalisé de manière que les bras de palpage suivent le contour prédéterminé C1, excepté sur la partie C20 située dans la zone de conflit Z1. Dans cette partie, les bras de palpage 301 sont pilotés pour suivre des courbes C30 qui appartiennent aux faces avant et arrière de la lentille et qui longent la zone de conflit Z1.

Les moyens de traitement 700 déduisent de ce palpage les coordonnées spatiales d'une pluralité de points qui appartiennent aux contours 3D avant et arrière mais qui sont situés en dehors de la zone de conflit Z1. Afin de calculer les coordonnées spatiales d'une pluralité de points de ces contours 3D qui sont situés dans la zone de conflit Z1, les moyens de traitement 700 réalisent un calcul d'interpolation de surface tenant compte de la forme du contour prédéterminé C1 dans le plan D1 et des coordonnées d'une pluralité de points appartenant aux courbes C30.

A cet effet, les moyens de traitement déterminent une fonction approchée représentative de la forme de chaque face optique de la lentille. Cette fonction peut par exemple être du type :
z = a₀ + a₁x + a₂y + a₃x² + a₄xy + a₅y², avec x, y les coordonnées d'un point dans le plan D1 et z son altitude par rapport au plan D1.

Les coefficients a₀, a₁, a₂, a₃, a₄, as sont alors déterminés en résolvant un système d'équations conçu à l'aide des coordonnées spatiales connues de cinq points palpés sur la courbe C30.

Les coefficients de cette fonction étant définis, les deux coordonnées x, y (dans le plan D1) de chaque point de la courbe C20 permettent de calculer une valeur approchée de l'altitude z de ce même point.

Les moyens de traitement 700 en déduisent ainsi les formes des contours 3D avant et arrière. Ils peuvent alors calculer l'épaisseur de la lentille le long du contour prédéterminé C1 de manière à vérifier qu'elle présente une épaisseur suffisante pour être détourée selon le contour prédéterminé C1.

En variante, la fonction approchée peut être choisie différemment ; elle peut en particulier présenter un ordre supérieur. En variante encore, les cinq points utilisés pour déterminer les coefficients de la fonction précitée peuvent être situés différemment sur les faces optiques de la lentille. Ils peuvent par exemple être palpés en dehors de la courbe C30, dans l'objectif spécifique de déterminer les coefficients de cette fonction.

### Etape 2 : Palpage de points caractéristiques de cette lentille

Les moyens de traitement 700 pilotent alors le plateau 102 et le bras de palpage 301 de manière à palper le point de blocage P1 (centre boxing) de la face avant 21 de la lentille ophtalmique L1, ainsi que plusieurs points situés au voisinage de ce point de blocage P1. Ce palpage permet de déterminer la hauteur du point de blocage par rapport au plateau 102, ainsi que l'orientation de l'axe de blocage (axe boxing).

Si la lentille est destinée à être percée pour être montée sur une monture du type percé, les moyens de traitement 700 procèdent de la même manière pour déterminer la hauteur des points de perçage par rapport au plateau 102, ainsi que l'orientation des axes de perçage.

### Etape 3 : Palpage de la deuxième lentille

Les moyens de traitement 700 procèdent ensuite de la même manière pour palper la deuxième lentille ophtalmique L2 selon son contour prédéterminé ainsi qu'au niveau de son point de blocage.

### Opération de blocage

### Etape 0 : Etalonnage des moyens de blocage

Cet étalonnage est généralement réalisé à intervalles réguliers lorsque le dispositif de préparation 1 est inutilisé (c'est-à-dire à l'étape 1 de l'opération de chargement). Il est préférentiellement réalisé à l'aide d'un accessoire de blocage 450 dédié, à poste sur une tige 160 du plateau 102, et dont la face de contact 452 est soit dépourvue de colle, soit pourvue d'une colle présentant un coefficient d'adhérence réduit.

Au cours de cette étape, les moyens de traitement 700 pilotent de manière coordonnée le plateau 102 et le bras de manipulation 401 afin de placer l'accessoire de blocage 450 sous la tête d'accueil 410 du bras de manipulation 401, en position dite de saisie.

Puis, les moyens de traitement 700 pilotent le corps supérieur 402 des moyens de blocage 400 en translation vers le plateau 102 de manière que le logement conique de la tête d'accueil 410 s'engage sur l'embase 451 de l'accessoire de blocage 450 et la saisisse. Le corps supérieur 402 est ensuite piloté en position haute pour dégager l'accessoire de blocage de la tige 160.

Les moyens de traitement 700 pilotent ensuite le plateau 102 en pivotement autour de son axe de rotation A1 pour placer son ouverture d'actualisation 150 en position de traitement par le dispositif d'acquisition d'images 200. Ils pilotent également le bras de manipulation 401 de manière à positionner sa tête d'accueil 410 au-dessus de l'ouverture d'actualisation 150.

Les moyens de traitement 700 pilotent alors le corps supérieur 402 des moyens de blocage 400 vers le plateau 102, au travers de l'ouverture d'actualisation 150, de manière à déposer l'accessoire de blocage sur l'écran dépoli des moyens d'acquisition d'image 200, en une position de consigne donnée et avec une orientation de consigne donnée (autour de son axe de révolution). Le corps supérieur 402 est ensuite piloté en position haute pour dégager le bras de manipulation 401 hors du champ du dispositif d'acquisition d'images 200. Dans cette position, le dispositif d'acquisition d'images 200 prend un cliché de l'organe de blocage déposé sur l'écran dépoli.

Les moyens de traitement 700 acquièrent alors sur ce cliché la position et l'orientation réelles de l'accessoire de blocage 450. Ils déterminent ensuite l'écart entre la position réelle de l'accessoire de blocage et sa position de consigne et l'écart entre l'orientation réelle de l'accessoire de blocage et son orientation de consigne. Ces écarts permettent d'étalonner les moyens de blocage 400.

En variante, les moyens de traitement peuvent répéter cette opération en déposant l'accessoire de blocage 450 en une seconde position de consigne distincte de la première, et avec une seconde orientation de consigne distincte de la première, puis en calculant deux autres écarts de position et d'orientation. En fonction de ces deux écarts de positions et de ces deux écarts d'orientations, les moyens de traitement 700 peuvent alors déterminer deux lois de correspondance linéaires faisant correspondre, à chaque position et à chaque orientation de l'accessoire de blocage 450, deux écarts. Ces lois de correspondance permettent ainsi d'étalonner les moyens de blocage 400 en fonction de la position angulaire du bras de manipulation 401 autour de l'axe A4 et de la position angulaire de la tête d'accueil 410 autour de l'axe A5.

En variante encore, les moyens de traitement 700 peuvent répéter cette opération plusieurs fois, en déposant l'accessoire de blocage 450 en divers endroits de l'écran dépoli avec diverses orientations, afin d'affiner ces lois de correspondance.

Quoi qu'il en soit, les moyens de traitement 700 acquièrent sur le cliché la ou les position(s) réelle(s) de l'accessoire de blocage 450 en déterminant les positions des ouvertures 461 des languettes 460 de l'accessoire de blocage 450 par rapport au contour de l'ouverture d'actualisation 150.

En variante, on pourra prévoir que l'accessoire de blocage dédié à l'étalonnage soit dépourvu de telles languettes et présente une forme ovale. Dans cette variante, les moyens de traitement 700 utiliseront comme élément de repérage de l'accessoire de blocage sa forme et/ou sa couleur.

Typiquement, les moyens de traitement 700 détermineront la position et l'orientation de l'accessoire de blocage en calculant, d'une part, la position du barycentre du contour de l'accessoire de blocage, et, d'autre part, la position de l'axe longitudinal de ce contour ovale. Pour améliorer le repérage de ce contour, on pourra prévoir que l'accessoire de blocage présente une couleur sombre, telle que le noir.

En variante, on pourra prévoir que les éléments de repérage de l'accessoire de blocage soient formés par de petites pastilles collées sur cet accessoire, et présentant des couleurs contrastées par rapport au reste de l'accessoire de blocage.

### Etape préliminaire :

Lorsque le centrage du job est accepté par l'opticien et que deux accessoires de blocage 450 convenant au blocage des lentilles sont identifiés, les moyens de traitement 700 procèdent au blocage des deux lentilles L1, L2 du job, c'est-à-dire à la dépose d'un accessoire de blocage 450 sur chaque lentille.

Au cours d'une étape préliminaire, les moyens de traitement 700 vérifient que l'opticien n'a pas oublié d'engager sur les tiges 160 au moins deux accessoires de blocage 450. A cet effet, les moyens de traitement 700 pilotent le plateau 102 pour placer la portion du plateau où sont situées les tiges 160 en position de traitement par le dispositif d'acquisition d'images 200. Comme le montre la figure 7, dans cette position, au moins une languette 460 de chaque accessoire de blocage 450 disposé sur le plateau 102 est visible par le dispositif d'acquisition d'images 200 au travers de l'ouverture 109 de plateau. Les moyens de traitement 700 peuvent ainsi contrôler la présence des accessoires de blocage, et vérifier que ces derniers sont correctement positionnés et orientés sur les tiges 160.

En variante, chaque accessoire de blocage peut être percé axialement d'une ouverture traversant débouchant sur sa face de contact. Cette ouverture est alors normalement obturée par l'adhésif de l'accessoire de blocage. Bien sûr, si ce dernier est malencontreusement dépourvu d'adhésif, cette ouverture est visible par le dispositif d'acquisition. De cette manière, les moyens de traitement sont aptes à repérer cette ouverture et à détecter cette anomalie. Dans ce cas, les moyens de traitement pilotent le plateau en position de chargement, pour que l'opticien change les accessoires de blocage.

### Etape 1 : Saisie d'un accessoire de blocage

Puis, les moyens de traitement 700 pilotent le plateau 102 pour placer l'un des accessoires de blocage 450 sélectionnés sous la tête d'accueil 410 du bras de manipulation 401 en position dite de saisie. La position de saisie est obtenue par la combinaison des mobilités de rotation du plateau 102 et du bras de manipulation 401 de telle sorte que la tête d'accueil 410 soit disposée verticalement en regard de l'accessoire de blocage 450.

Puis, les moyens de traitement 700 pilotent la translation du corps supérieur 402 des moyens de blocage 400 vers le plateau 102 de manière que le logement conique de la tête d'accueil 410 s'engage sur l'embase 451 de l'accessoire de blocage 450 afin de la saisir. Le corps supérieur 402 est ensuite piloté en position haute pour dégager l'accessoire de blocage de la tige 160 qui le supportait initialement.

### Etape 2 : Repérage de la position du bras de manipulation

Les moyens de traitement 700 pilotent le plateau 102 en pivotement autour de son axe de rotation A1 pour placer l'ouverture d'étalonnage 130 qui jouxte le premier emplacement d'accueil 110 en position de traitement par le dispositif d'acquisition d'images 200. Ils pilotent également les moyens de blocage 400 pour placer la tête d'accueil 410 du bras de manipulation 401 en position de blocage.

La position de blocage de la tête d'accueil 410 correspond à la position dans laquelle elle se trouvera au moment de déposer l'accessoire de blocage 450 sur la lentille ophtalmique L1. Cette position est calculée en fonction des coordonnées du point de blocage P1 palpé et de l'axe de cylindre et/ou de la direction de polarisation de la lentille. De cette manière, en position de blocage, le point de pivotement P3 de la tête d'accueil 410 est situé à la même hauteur par rapport au plateau 102 que le point de blocage P1. En outre, en position de blocage, l'accessoire de blocage 450 présente une position angulaire autour de l'axe A5 (figure 5) qui permettra de poser l'accessoire de blocage avec une orientation correcte par rapport à l'orientation de la lentille. Une fois ces positions de consigne du plateau 102 et de la tête d'accueil 410 atteintes, le dispositif d'acquisition d'images 200 prend un cliché du bras de manipulation 410 et des divers éléments de repérage du bras et de l'accessoire de blocage.

Les moyens de traitement 700 déterminent alors, en fonction de la position des ouvertures 411, 412 de la collerette 415 de la tête d'accueil 410, les positions angulaires réelles du bras de manipulation 401 autour de son axe de rotation A4 et de la tête d'accueil autour de son axe A5 (figure 5). Ils comparent ensuite ces positions réelles avec les positions de consigne et en déduisent un écart. Si cet écart est supérieur à une valeur seuil prédéterminée, ils rectifient la position du bras de manipulation 401 et de sa tête d'accueil 410 par rapport au plateau 102.

En variante, si cet écart est supérieur à une valeur seuil prédéterminée, la position du bras de manipulation 401 et de sa tête d'accueil 410 par rapport au plateau 102 n'est pas rectifiée mais l'écart est transmis au dispositif d'usinage de la lentille. L'erreur de centrage due à cet écart est alors pris en compte par le dispositif de détourage de la lentille. Dans cette variante, l'accessoire de blocage ne sera donc pas positionné exactement sur le point de blocage P1 de la lentille mais sera au contraire décalé.

Par ailleurs, les moyens de traitement 700 vérifient la présence et le positionnement correct de l'accessoire de blocage 450 sur le bras de manipulation 401. A cet effet, ils déterminent sur le cliché les positions des images des languettes 460 de l'accessoire de blocage 450 vues au travers des fenêtres 413 de la collerette 415. Ces positions fournissent aux moyens de traitement 700 la position de l'accessoire de blocage 450 saisi, qui est sensée correspondre à la position préalablement déterminée du bras de manipulation 401. Si c'est le cas, les moyens de traitement 700 en déduisent que non seulement l'accessoire a effectivement été saisi, mais qu'en outre il est correctement positionné sur la tête d'accueil 410.

Une fois l'accessoire de blocage 450 correctement saisi et les moyens de blocage 400 convenablement positionnés, les moyens de traitement 700 commandent la translation verticale du bras de manipulation 401 vers le haut du dispositif de préparation 1, en s'assurant que les positions angulaires du bras de manipulation 401 et de la tête d'accueil 410 autour de leurs axes de rotation A4, A5 respectifs ne varient pas.

En variante, lors de la mise en place des moyens de blocage 400 en regard du dispositif d'acquisition d'images 200, les moyens de traitement 700 peuvent piloter ces moyens de blocage 400 pour que, dans le plan du plateau 102, la tête d'accueil 410 du bras de manipulation 401 soit en position de blocage, et pour que ces moyens de blocage restent écartés du plateau 102 d'une hauteur telle que, si le plateau pivote, ces moyens de blocage n'entrent pas en collision avec le plateau 102.

Dans cette variante, le cliché pris du bras de manipulation 401 permet de déterminer et de corriger la position de la tête de blocage et de l'accessoire de blocage 450 alors que ces derniers sont écartés verticalement de leurs positions de blocage.

Si les axes de rotation A1, A4 du plateau 102 et du bras de manipulation 401 sont strictement parallèles, aucune correction supplémentaire de la position du bras de blocage n'est nécessaire. En revanche, on comprend que s'il existe un défaut de parallélisme entre ces axes, la descente du bras de manipulation 401 en position de blocage générera un décalage du bras par rapport au plateau.

Dans cette variante, lorsque le dispositif de préparation n'est pas utilisé (étape 1 de l'opération de chargement), les moyens de traitement 700 étalonnent, à intervalles réguliers, la position de l'axe de rotation A4 du bras par rapport au plateau 102. A cet effet, ils prennent deux clichés de la collerette 410 du bras de manipulation 401 à deux altitudes différentes de ce dernier, et ils en déduisent ledit angle de défaut de parallélisme. Connaissant cet angle, les moyens de traitement 700 peuvent alors corriger la position du bras de blocage afin de tenir compte de ce défaut de parallélisme.

### Etape 3 : Mise en place de l'accessoire de blocage sur la lentille

Dans un premier temps, le plateau 102 est piloté pour ramener le premier emplacement d'accueil 110 en position de traitement par le dispositif d'acquisition, de manière que le point de blocage de la lentille soit situé sous l'accessoire de blocage 450. Afin de contrôler que sa nouvelle position correspond à la position de consigne, le dispositif d'acquisition d'image 200 prend un cliché de l'emplacement d'accueil 110 et de ses ouvertures 111. Les moyens de traitement 700 déduisent de ce cliché la position angulaire du plateau 102 autour de son axe de rotation A1 et par conséquent la position angulaire de la lentille. Cette position angulaire est comparée avec la position angulaire mémorisée dans la mémoire de masse à l'issue de l'opération de centrage. Si l'écart angulaire entre ces deux positions ne correspond pas à celui désiré (ce qui est significatif d'une perte de pas du moteur d'actionnement du plateau 102), les moyens de traitement 700 rectifient la position du plateau 102 afin de précisément positionner la lentille ophtalmique L1 en position de blocage.

Dans un second temps, les moyens de traitement 700 commandent la translation verticale du bras de manipulation 401 vers le plateau 102, en s'assurant que les positions angulaires du bras de manipulation 401 et de la tête d'accueil autour de leurs axes de rotation A4, A5 respectifs ne varient pas. Cette translation est tout d'abord rapide (supérieure à 20 millimètres par seconde), puis devient lente (inférieure à 5 millimètres par seconde) lorsque l'accessoire de blocage 450 arrive à proximité de la lentille (à moins de 2 millimètres du point de blocage P1 dont la hauteur est connue).

La face de contact de l'accessoire de blocage 450 s'applique alors parfaitement sur la face avant 21 de la lentille, grâce aux deux mobilités de rotation libres de la tête d'accueil 410, de sorte que l'adhésif de la face de contact adhère solidement à la lentille.

Enfin, dans un troisième temps, les moyens de traitement 700 commandent la translation verticale du bras de manipulation 401 vers le haut du dispositif de préparation 1, selon un axe parallèle à l'axe de rotation A1 du plateau 102, pour dégager l'embase 451 de l'accessoire de blocage 450 en dehors du logement conique de la tête d'accueil 410. Les conicités de l'embase 451 et du logement évitent que la levée de la tête d'accueil 410 génère un effort transversal sur l'embase 451 de l'accessoire de blocage, au risque de décaler l'embase par rapport au point de blocage P1. Au contraire, dès le début de cette levée, l'ensemble de la surface latérale du logement se désolidarise de la surface latérale de l'embase, même si l'accessoire est incliné du fait de la courbure de la lentille.

### Etape 4 :

Il arrive toutefois qu'à l'issue de cette étape de dépose de l'accessoire de blocage 450 sur la lentille ophtalmique L1, malgré le soin apporté à cette opération, l'accessoire de blocage 450 ne soit pas situé exactement en regard du point de blocage P1 et/ou qu'il ne présente pas l'orientation souhaitée (autour de son axe de révolution). Ce décalage peut être dû à des mouvements intempestifs des organes du dispositif de préparation 1 durant ou après la dépose de l'accessoire de blocage, ou encore à un dégagement délicat de l'embase 451 de l'accessoire de blocage 450 en-dehors du logement conique de la tête d'accueil 410.

Pour remédier à ce problème, on peut prévoir que les moyens de traitement électroniques et/ou informatiques 700 identifient un écart de position entre le point P1 et la position réelle du centre de la face de contact 452 de l'accessoire de blocage 450 appliqué sur la lentille ophtalmique L1, et un écart angulaire entre l'orientation réelle et l'orientation de consigne de cet accessoire de blocage, puis qu'ils comparent ces écarts identifiés avec des seuils prédéterminés.

Ici, les seuils sont mémorisés dans la mémoire de masse des moyens de traitement électroniques et/ou informatiques 700 et ils comportent une valeur de distance, ici égale à 0,5 millimètre, et une valeur d'angle, ici égale à 2 degrés.

Puis, si les moyens de traitement électroniques et/ou informatiques 700 déterminent que l'un ou l'autre des écarts identifiés est supérieur au seuil correspondant, les moyens de traitement électroniques et/ou informatiques 700 génèrent un message d'alerte. Plus précisément, ils affichent un message d'alerte sur l'écran d'affichage 600, conseillant à l'opérateur de stopper la préparation du job et de la réinitialiser.

En revanche, si les deux écarts identifiés sont inférieurs aux seuils prédéterminés ou si l'opérateur ne stoppe pas la préparation du job, les moyens de traitement électroniques et/ou informatiques 700 génèrent, en vue de l'usinage de la lentille ophtalmique L1, un signal comportant une donnée relative auxdits écarts identifiés, tandis que le processus de préparation du job continue (voir Etape 5).

Ce signal sera alors exploité par le dispositif d'usinage numérique des lentilles du job.

Plus précisément, le dispositif de préparation 1 comportant des moyens de communication adaptés à communiquer avec des moyens de communication correspondant du dispositif d'usinage, les moyens de traitement 700 envoient le signal au dispositif d'usinage via ces moyens de communication.

Le dispositif d'usinage, qui ne fait pas en propre l'objet de la présente invention, est bien connu de l'homme du métier. Un exemple d'un tel dispositif est par exemple décrit dans le document US 6 327 790 ou commercialisé par la demanderesse sous la marque Kappa CTD.

Ce dispositif comprend des arbres de maintien et d'entraînement en rotation d'une lentille ophtalmique autour d'un axe de blocage, et un outil d'usinage (tel qu'une meule) monté rotatif autour d'un axe parallèle à l'axe de blocage de la lentille. Le dispositif d'usinage comporte en outre des moyens de pilotage des mobilités des arbres et de l'outil d'usinage permettant en particulier de piloter, pour chaque position angulaire de la lentille autour de son axe de blocage, l'écartement radial entre l'outil d'usinage et l'axe de blocage, suivant une consigne de pilotage donnée.

Cette consigne de pilotage est généralement générée par les moyens de pilotage en fonction de la forme des cercles de la monture de lunettes choisie par le porteur des lentilles à usiner. Ici, cette consigne de pilotage est également générée en fonction du signal transmis par le dispositif de préparation 1, c'est-à-dire en fonction des écarts de distance et d'orientation identifiés. La consigne de pilotage est plus particulièrement corrigée pour compenser ces écarts identifiés.

### Etape 5 :

Quoi qu'il en soit, une fois l'accessoire de blocage 450 collé sur la première lentille, les moyens de traitement 700 mettent à nouveau en oeuvre les étapes 1 à 4 précitées pour déposer un autre accessoire de blocage sur la deuxième lentille ophtalmique L2. En revanche, lors de l'étape 2, les moyens de traitement 700 pilotent le plateau 102 en pivotement autour de son axe de rotation A1 pour placer l'ouverture d'étalonnage 131 qui jouxte non pas le premier emplacement d'accueil 110, mais le deuxième emplacement d'accueil 120, en position de traitement par le dispositif d'acquisition d'images 200. L'utilisation de cette ouverture d'étalonnage 131 permet de réaliser un gain de temps lors du pivotement du plateau 102 puisque cette ouverture 131 est proche du deuxième emplacement d'accueil 120.

### Opération de déchargement

Le plateau 102 est piloté pour ramener les emplacements d'accueil 110, 120 en regard de la porte d'accès 501, dans la zone de chargement 12. Les pinces de serrage 115, 125 sont alors pilotées en position d'ouverture de sorte que les lentilles ophtalmiques L1, L2 reposent sur les sièges 11.

Puis, la porte d'accès 501 s'ouvre automatiquement de manière que l'opticien puisse récupérer le job.

Les lentilles L1, L2 équipées de leurs accessoires de blocage 450 sont alors aptes à être positionnées par l'opticien dans le dispositif de détourage, entre ses nez de préhension de lentilles. La position de l'accessoire de blocage et son orientation dans le plan D1 de la lentille permet alors au dispositif de détourage de connaître le référentiel de la lentille, et donc de déterminer la position du contour déterminé C1 sur la lentille.

## Revendications

1. Dispositif de préparation (1) d'une lentille ophtalmique (L1, L2) en vue de son usinage, comportant :
- un support (100) apte à maintenir ladite lentille ophtalmique (L1, L2),
- des moyens de blocage (400) comportant au moins un accessoire de blocage (450) et un bras de manipulation (401) de cet accessoire de blocage (450),
- un dispositif d'acquisition (200) apte à acquérir une image (601) de la lentille ophtalmique (L1, L2) maintenue par le support (100),
- des moyens de traitement électroniques et/ou informatiques (700) aptes, d'une part, à déduire de l'image (601) acquise par le dispositif d'acquisition (200) un référentiel optique de la lentille ophtalmique (L1, L2), et, d'autre part, à piloter en position le bras de manipulation (401) et/ou le support (100) pour appliquer ledit accessoire de blocage (450) contre la lentille ophtalmique (L1, L2) en une position de blocage (P1) donnée dépendant du référentiel optique déduit,
**caractérisé en ce que** les moyens de blocage (400) et/ou le support (100) comportent au moins un élément de repérage (101, 111, 121, 411, 412, 461) et **en ce que** les moyens de traitement électroniques et/ou informatiques (700) sont adaptés à identifier, sur une image (601) acquise par le dispositif d'acquisition (200) sur laquelle apparaît une image dudit élément de repérage (101, 111, 121, 411, 412, 461), la position de cet élément de repérage (101, 111, 121, 411, 412, 461).

2. Dispositif selon la revendication 1, dans lequel les moyens de traitement (700) sont adaptés à déterminer la position réelle du bras de manipulation (401) et/ou la position du support (100) en fonction de la position identifiée de l'élément de repérage (101, 111, 121, 411, 412, 461).

3. Dispositif selon la revendication précédente, dans lequel les moyens de traitement électroniques et/ou informatiques (700) sont adaptés, d'une part, à identifier un écart entre ladite position réelle et une position de consigne du bras de manipulation (401) relativement au support (100), et, d'autre part, à générer, en vue de l'usinage de la lentille ophtalmique (L1, L2), un signal comportant une donnée relative audit écart identifié, le dispositif de préparation (1) comportant des moyens de communication avec un dispositif d'usinage qui sont adaptés à transmettre ledit signal.

4. Dispositif selon l'une des revendications précédentes, dans lequel le bras de manipulation (401) et/ou le support (100) comportent au moins deux éléments de repérage (101, 111, 121, 411, 412) présentant des formes géométriques distinctes.

5. Dispositif selon l'une des revendications précédentes, dans lequel ledit élément de repérage (101, 111, 121, 411, 412, 461) comporte une ouverture traversante.

6. Dispositif selon l'une des revendications précédentes, dans lequel l'accessoire de blocage (450) est pourvu dudit élément de repérage (460) et dans lequel les moyens de traitement électroniques et/ou informatiques (700) sont aptes, d'une part, à détecter la présence ou l'absence dudit élément de repérage (460) en fonction de l'image (601) acquise par le dispositif d'acquisition (200), et, d'autre part, à en déduire la présence ou l'absence dudit accessoire de blocage (460) sur le bras de manipulation (401).

7. Dispositif selon la revendication précédente, dans lequel le bras de manipulation (401) comporte au moins une fenêtre (413) et ledit élément de repérage de l'accessoire de blocage (450) comporte au moins une languette (460) dont l'image acquise par le dispositif d'acquisition (200) assombrie au moins en partie l'image de la fenêtre (413) lorsque l'accessoire de blocage (450) est correctement positionné sur le bras de manipulation (401).

8. Dispositif selon l'une des revendications précédentes, dans lequel l'accessoire de blocage (450) étant disposé sur le support (100) et comportant un élément de repérage (460) du type précité, le dispositif d'acquisition (200) est apte à acquérir une image (601) d'une partie au moins du plateau et dudit accessoire de blocage (450), et les moyens de traitement électroniques et/ou informatiques (700) sont aptes, de première part, à détecter la présence ou l'absence dudit élément de repérage (460) en fonction de l'image (601) acquise, de deuxième part, à en déduire la présence ou l'absence dudit accessoire de blocage (460) sur le support (100), et, de troisième part, à déterminer la position dudit accessoire de blocage (460) relativement au support (100).

9. Dispositif selon l'une des revendications précédentes, dans lequel ledit élément de repérage (460) appartient à l'accessoire de blocage (450).

10. Dispositif selon la revendication précédente, dans lequel les moyens de traitement électroniques et/ou informatiques (700) sont adaptés, d'une part, à identifier un écart de distance et/ou angulaire entre une position réelle de l'accessoire de blocage (450) appliqué sur la lentille ophtalmique (L1, L2) et une position de consigne, et, d'autre part, à générer un signal comportant une donnée relative audit écart identifié, le dispositif de préparation (1) comportant des moyens de communication adaptés à transmettre ledit signal à des moyens de communication correspondant d'un dispositif d'usinage numérique adapté à usiner la lentille ophtalmique (L1, L2) en fonction dudit signal transmis.

11. Dispositif selon l'une des deux revendications précédentes, dans lequel les moyens de traitement électroniques et/ou informatiques (700) sont adaptés, de première part, à identifier un écart de distance et/ou angulaire entre une position réelle de l'accessoire de blocage (450) appliqué sur la lentille ophtalmique (L1, L2) et une position de consigne, de seconde part, à comparer ledit écart identifié avec un seuil prédéterminé, et, de troisième part, si cet écart identifié est supérieur audit seuil prédéterminé, à générer un message d'alerte.

12. Dispositif selon l'une des revendications précédentes, dans lequel le support (100) comporte une pluralité d'emplacements d'accueil (110, 120) de lentilles ophtalmiques (L1, L2) chacun jouxté d'une ouverture d'étalonnage (130, 131) traversant le support (100) et à chacun desquels est associé un élément de repérage (111, 121) du type précité, et dans lequel les moyens de traitement électroniques et/ou informatiques (700) sont adaptés, d'une part, à piloter le bras de manipulation (401) relativement au support (100) pour disposer ladite ouverture d'étalonnage (130, 131) et le bras de manipulation (401) dans une position de traitement par le dispositif d'acquisition (200) dans laquelle ledit élément de repérage (111, 121) associé à cet emplacement d'accueil (110, 120) figure sur l'image (601) acquise par le dispositif d'acquisition (200), et, d'autre part, à déterminer la position de chaque élément de repérage (411, 412) du bras de manipulation (401) en fonction de l'image acquise par le dispositif d'acquisition (200).

13. Dispositif selon l'une des revendications précédentes, dans lequel, ledit accessoire de blocage (450) étant manipulé par le bras de manipulation (401) et présentant une face de contact (452) apte à s'appliquer contre la lentille ophtalmique (L1, L2) maintenue par le support (100), le bras de manipulation (401) comporte un corps allongé (420) et une tête d'accueil (410) de l'accessoire de blocage (450), ladite tête d'accueil (410) étant reliée au corps allongé (420) par une liaison rotule présentant une mobilité de rotation pilotée par les moyens de traitement électroniques et/ou informatiques (700) et deux mobilités de rotation libres autour d'un point de pivotement (P3) situé sur ladite face de contact (452).

14. Dispositif selon la revendication précédente, dans lequel la tête d'accueil (410) comporte un alésage conique divergent vers son embouchure et chaque accessoire de blocage (450) comporte une embase conique (451) convergente enfichable dans l'alésage conique divergent de la tête d'accueil (410).

15. Procédé de préparation d'une lentille ophtalmique (L1, L2) au moyen d'un dispositif de préparation (1) selon la revendication 12, comportant les étapes de :
a - piloter le support (100) pour disposer l'un des emplacements d'accueil (110, 120) en position de traitement par le dispositif d'acquisition (200), puis
b - acquérir une première image de la lentille ophtalmique (L1, L2) maintenue dans ledit emplacement d'accueil (110, 120) et de l'élément de repérage (111, 121) de cet emplacement d'accueil (110, 120),
c - piloter le bras de manipulation (401) et le support (100) pour disposer l'ouverture d'étalonnage (130, 131) jouxtant ledit emplacement d'accueil (110, 120) et le bras de manipulation (401) dans une position de traitement par le dispositif d'acquisition (200), puis
d - acquérir une image du bras de manipulation (401) et de l'élément de repérage (411, 412) de ce bras de manipulation (401),
e - identifier un écart entre une position de consigne du bras de manipulation (401) et sa position réelle déduite de la position de l'image acquise de l'élément de repérage (411, 412) du bras de manipulation (401),
f - piloter le support (100) pour ramener ledit emplacement d'accueil (110, 120) en position de traitement par le dispositif d'acquisition (200),
g - acquérir une deuxième image de la lentille ophtalmique (L1, L2) maintenue dans ledit emplacement d'accueil (110, 120) et de l'élément de repérage (111, 121) de cet emplacement d'accueil (110, 120),
h - identifier un écart entre une position de consigne du support (100) et sa position réelle déduite des positions des première et deuxième images acquises de l'élément de repérage (111, 121) dudit emplacement d'accueil (110, 120), et enfin
i - piloter le bras de manipulation (401) vers le support (100) pour appliquer ledit accessoire de blocage (450) contre la lentille ophtalmique (L1, L2).

## Claims

1. A preparation device (1) for preparing an ophthalmic lens (L1, L2) to be machined, the device comprising:
· a support (100) suitable for holding said ophthalmic lens (L1, L2);
· blocking means (400) including at least one blocking accessory (450) and a manipulator arm (401) for manipulating said blocking accessory (450);
· an acquisition device (200) suitable for acquiring an image (601) of the ophthalmic lens (L1, L2) held by the support (100); and
· electronic and/or computer processor means (700) suitable firstly for deducing an optical frame of reference of the ophthalmic lens (L1, L2) from the image (601) acquired by the acquisition device (200), and secondly for controlling the position of the manipulator arm (401) and/or of the support (100) to apply said blocking accessory (450) against the ophthalmic lens (L1, L2) in a given blocking position (P1) that depends on the deduced optical frame of reference;
the device being **characterized in that** the blocking means (400) and/or the support (100) include at least one marker element (101, 111, 121, 411, 412, 461), and **in that** the electronic and/or computer processor means (700) are adapted to identify the position of said marker element (101, 111, 121, 411, 412, 461) in an image (601) acquired by the acquisition device (200) and in which there appears an image of said marker element (101, 111, 121, 411, 412, 461).

2. A device according to claim 1, wherein the processor means (700) are adapted to determine the real position of the manipulator arm (401) and/or the position of the support (100) as a function of the identified position of the marker element (101, 111, 121, 411, 412, 461).

3. A device according to the preceding claim, wherein the electronic and/or computer processor means (700) are adapted firstly to identify a difference between said real position and a setpoint position for the manipulator arm (401) relative to the support (100), and secondly to prepare for machining of the ophthalmic lens (L1, L2) by generating a signal that includes data relating to said identified difference, the preparation device (1) including communications means suitable for communicating with a machining device and for conveying said signal.

4. A device according to any preceding claim, wherein the manipulator arm (401) and/or the support (100) include at least two marker elements (101, 111, 121, 411, 412) presenting distinct geometrical shapes.

5. A device according to any preceding claim, wherein said marker element (101, 111, 121, 411, 412, 416) comprises a through opening.

6. A device according to any preceding claim, wherein the blocking accessory (450) is provided with said marker element (460) and wherein the electronic and/or computer processor means (700) are suitable firstly for detecting the presence or the absence of said marker element (460) as a function of the image (601) acquired by the acquisition device (200), and secondly for deducing therefrom the presence or the absence of said blocking accessory (450) on the manipulator arm (401).

7. A device according to the preceding claim, wherein the manipulator arm (401) includes at least one window (413), and said marker element of the blocking accessory (450) includes at least one tongue (460) such that the image thereof acquired by the acquisition device (200) darkens at least a portion of the image of the window (413) when the blocking accessory (450) is properly positioned on the manipulator arm (401).

8. A device according to any preceding claim, wherein the blocking accessory (450) is disposed on the support (100) and includes a marker element (460) of the above-specified type, and the acquisition device (200) is suitable for acquiring an image (601) of at least a portion of the support and of said blocking accessory (450), with the electronic and/or computer processor means (700) being suitable firstly for detecting the presence or the absence of said marker element (460) as a function of the acquired image (601), secondly for deducing therefrom the presence or the absence of said blocking accessory (450) on the support (100), and thirdly for determining the position of said blocking accessory (450) relative to the support (100).

9. A device according to any preceding claim, wherein said marker element (460) forms part of the blocking accessory (450).

10. A device according to the preceding claim, wherein the electronic and/or computer processor means (700) are adapted firstly to identify a distance and/or angle difference between a real position of the blocking accessory (450) applied to the ophthalmic lens (L1, L2) and a setpoint position, and secondly to generate a signal including data relating to said identified difference, the preparation device (1) including communications means suitable for transmitting said signal to corresponding communications means of a digital machining device suitable for machining the ophthalmic lens (L1, L2) as a function of said transmitted signal.

11. A device according to either one of the two preceding claims, wherein the electronic and/or computer processsor means (700) are adapted firstly to identify a distance and/or angle difference between the real position of the blocking accessory (450) applied to the ophthalmic lens (L1, L2) and a setpoint position, secondly to compare said identified difference with a predetermined threshold, and thirdly, if said identified difference is greater than said predetermined threshold, to generate a warning message.

12. A device according to any preceding claim, wherein the support (100) includes a plurality of reception locations (110, 120) for receiving ophthalmic lenses (L1, L2), each of which is adjacent to a calibration opening (130, 131) passing through the support (100) and each of which is associated with a marker element (111, 121) of the above-specified type, and wherein the electronic and/or computer processor means (700) are adapted firstly to control the manipulator arm (401) relative to the support (100) so as to place said calibration opening (130, 131) and the manipulator arm (401) in a position for processing by the acquisition device (200), in which position said marker element (111, 121) associated with said reception location (110, 120) appears in the image (601) acquired by the acquisition device (200), and secondly to determine the position of each marker element (411, 412) of the manipulator arm (401) as a function of the image acquired by the acquisition device (200).

13. A device according to any preceding claim, wherein said blocking accessory (450) is manipulated by the manipulator arm (401) and presents a contact face (452) suitable for pressing against the ophthalmic lens (L1, L2) held by the support (100), and the manipulator arm (401) comprises an elongate body (420) and a reception head (410) for receiving the blocking accessory (450), said reception head (410) being connected to the elongate body (420) via a ball joint presenting one freedom of movement in rotation under the control of the electronic and/or computer processor means (700) and two unconstrained freedoms of movement in rotation freely about a pivot point (P3) situated on said contact face (452).

14. A device according to the preceding claim, wherein the reception head (410) includes a conical bore diverging towards its mouth and each blocking accessory (450) includes a converging conical base (451) engageable in the diverging conical bore of the reception head (410).

15. A method of preparing an ophthalmic lens (L1, L2) by means of a preparation device (1) according to claim 12, the method comprising the steps of:
a) controlling the support (100) to place one of the reception locations (110, 120) in position for processing by the acquisition device (200); then
b) acquiring a first image of the ophthalmic lens (L1, L2) held in said reception location (110, 120) and of the marker element (111, 121) of said reception location (110, 120);
c) controlling the positions of the manipulator arm (401) and of the support (100) to place the calibration opening (130, 131) adjacent to said reception location (110, 120) and the manipulator arm (401) in a position for being processed by the acquisition device (200); then
d) acquiring an image of the manipulator arm (401) and of the marker element (411, 412) of said manipulator arm (401);
e) identifying a difference between a setpoint position for the manipulator arm (401) and its real position as deduced from the position of the image acquired of the marker element (411, 412) of the manipulator arm (401);
f) controlling the position of the support (100) to bring said reception location (110, 120) into a position for being processed by the acquisition device (200);
g) acquiring a second image of the ophthalmic lens (L1, L2) held in said reception location (110, 120) and of the marker element (111, 121) of said reception location (110,120);
h) identifying a difference between a setpoint position for the support (100) and its real position deduced from the positions of the first and second images acquired of the marker element (111, 121) of said reception location (110, 120); and finally
i) controlling the manipulator arm (401) to move towards the support (100) to apply said blocking accessory (450) against the ophthalmic lens (L1, L2).

## Patentansprüche

1. Präparierungsvorrichtung (1) für ein zu bearbeitendes Brillenglas (L1, L2), welche umfasst:
- eine Halterung (100) zum Halten des Brillenglases (L1, L2),
- Einspannmittel (400) mit mindestens einem Einspannzubehör (450) und einem Betätigungsarm (401) für dieses Einspannzubehör (450),
- eine Erfassungsvorrichtung (200) zum Erfassen eines Bildes (601) des von der Halterung (100) gehaltenen Brillenglases (L1, L2),
- Elektronischenverarbeitungsmittel und/oder Datenverarbeitungsmittel (700), die sich einerseits dazu eignen, vom von der Erfassungsvorrichtung (200) erfassten Bild (601) ein optisches Referenzsystem für das Brillenglas (L1, L2) abzuleiten, und andererseits dazu, den Betätigungsarm (401) und/oder die Halterung (100) in Position zu steuern, um das Einspannzubehör (450) in einer bestimmten vom abgeleiteten optischen Referenzsystem abhängigen Einspannposition (P1) gegen das Brillenglas (L1, L2) zu halten,
**dadurch gekennzeichnet, dass** die Einspannmittel (400) und/oder die Halterung (100) mindestens ein Kennzeichnungselement (101, 111, 121, 411, 412, 461) umfassen und **dadurch**, dass die Elektronischenverarbeitungsmittel und/oder Datenverarbeitungsmittel (700) auf einem von der Erfassungsvorrichtung (200) erfassten Bild (601), auf dem ein Bild des Kennzeichnungselements (101, 111, 121, 411, 412, 461) erscheint, die Position dieses Kennzeichnungselements (101, 111, 121, 411,412, 461) identifizieren können.

2. Vorrichtung nach Anspruch 1, bei der sich die Verarbeitungsmittel (700) dazu eignen, die tatsächliche Position des Betätigungsarms (401) und/oder die Position der Halterung (100) in Abhängigkeit der identifizierten Position des Kennzeichnungselements (101, 111, 121, 411, 412, 461) zu ermitteln.

3. Vorrichtung nach vorausgehendem Anspruch, bei der sich die Elektronischenverarbeitungsmittel und/oder Datenverarbeitungsmittel (700) einerseits dazu eignen, eine Abweichung zwischen der tatsächlichen Position und einer Sollposition des Betätigungsarms (401) in Bezug zur Halterung (100) zu identifizieren, und andererseits dazu eignen, in Hinblick auf die Bearbeitung des Brillenglases (L1, L2) ein Signal zu erzeugen, das relative Daten der identifizierten Abweichung enthält, wobei die Präparierungsvorrichtung (1) Kommunikationsmittel mit einer Bearbeitungsvorrichtung umfasst, die sich dazu eignen, dieses Signal zu übertragen.

4. Vorrichtung nach einem der vorausgehenden Ansprüche, bei der der Betätigungsarm (401) und/oder die Halterung (100) mindestens zwei Kennzeichnungselemente (101, 111, 121, 411, 412) mit unterschiedlichen geometrischen Formen aufweist.

5. Vorrichtung nach einem der vorausgehenden Ansprüche, bei der das Kennzeichnungselement (101, 111, 121, 411, 412, 461) eine durchgehende Öffnung umfasst.

6. Vorrichtung nach einem der vorausgehenden Ansprüche, bei der das Einspannzubehör (450) mit dem Kennzeichnungselement (460) versehen ist und bei der die Elektronischenverarbeitungsmittel und/oder Datenverarbeitungsmittel (700) sich einerseits dazu eignen, zu prüfen, ob das Kennzeichnungselement (460) entsprechend dem von der Erfassungsvorrichtung (200) erfassten Bild (601) vorhanden ist oder nicht, und andererseits dazu, daraus abzuleiten, ob das Einspannzubehör (460) am Betätigungsarm (401) vorhanden ist oder nicht.

7. Vorrichtung nach vorausgehendem Anspruch, bei der der Betätigungsarm (401) mindestens ein Fenster (413) umfasst und das Kennzeichnungselement des Einspannzubehörs (450) mindestens eine Lasche (460) umfasst, deren von der Erfassungsvorrichtung (200) erfasstes Bild mindestens teilweise das Bild des Fensters (413) abdunkelt, wenn das Einspannzubehör (450) richtig am Betätigungsarm (401) positioniert ist.

8. Vorrichtung nach einem der vorausgehenden Ansprüche, bei der das Einspannzubehör (450) auf der Halterung (100) angeordnet ist und ein Kennzeichnungselement (460) der vorab aufgeführten Art umfasst, wobei die Erfassungsvorrichtung (200) ein Bild (601) zumindest eines Teils der Halterung und des Einspannzubehörs (450) erfassen kann, und die Elektronischenverarbeitungsmittel und/oder Datenverarbeitungsmittel (700) erstens dazu geeignet sind, zu prüfen, ob das Kennzeichnungselement (460) entsprechend dem erfassten Bild (601) vorhanden ist oder nicht, und zweitens dazu, daraus abzuleiten, ob das Einspannzubehör (460) an der Halterung (100) vorhanden ist oder nicht, und drittens dazu, die Position des Einspannzubehörs (460) in Bezug zur Halterung (100) zu ermitteln.

9. Vorrichtung nach einer der vorausgehenden Ansprüche, bei der das Kennzeichnungselement (460) zum Einspannzubehör (450) gehört.

10. Vorrichtung nach vorausgehendem Anspruch, bei der sich die Elektronischenverarbeitungsmittel und/oder Datenverarbeitungsmittel (700) einerseits dazu eignen, eine Abweichung der Distanz und/oder des Winkels zwischen einer tatsächlichen Position des am Brillenglas (L1, L2) angebrachten Einspannzubehörs (450) und einer Sollposition zu identifizieren und andererseits dazu, ein Signal zu erzeugen, das relative Daten der identifizierten Abweichung enthält, wobei die Präparierungsvorrichtung (1) Kommunikationsmittel umfasst, die sich dazu eignen, dieses Signal an entsprechende Kommunikationsmittel einer digitalen Bearbeitungsvorrichtung zu übertragen, die wiederum das Brillenglas (L1, L2) entsprechend dem übertragenen Signal bearbeiten kann.

11. Vorrichtung nach einem der zwei vorausgehenden Ansprüche, bei der sich die Elektronischenverarbeitungsmittel und/oder Datenverarbeitungsmittel (700) erstens dazu eignen, eine Abweichung der Distanz und/oder des Winkels zwischen einer tatsächlichen Position des am Brillenglas (L1, L2) angebrachten Einspannzubehörs (450) und einer Sollposition zu identifizieren, zweitens dazu, die identifizierte Abweichung mit einem vorgegebenen Grenzwert zu vergleichen und drittens dazu, eine Warnmeldung zu erzeugen, wenn diese identifizierte Abweichung größer ist als der vorgegebene Grenzwert.

12. Vorrichtung nach einem der vorausgehenden Ansprüche, bei der die Halterung (100) eine Vielzahl von Aufnahmeplätzen (110, 120) für Brillengläser (L1, L2) umfasst, die alle an eine die Halterung (100) durchquerende Kalibrieröffnung (130, 131) angrenzen und denen alle ein Kennzeichnungselement (111, 121) der vorab aufgeführten Art zugeordnet ist, und bei der sich die Elektronischenverarbeitungsmittel und/oder Datenverarbeitungsmittel (700) einerseits dazu eignen, den Betätigungsarm (401) in Bezug zur Halterung (100) so zu steuern, dass die Kalibrieröffnung (130, 131) und der Betätigungsarm (401) in einer Bearbeitungsposition für die Erfassungsvorrichtung (200) sind, in der das diesem Aufnahmeplatz (110, 120) zugeordnete Kennzeichnungselement (111, 121) auf dem von der Erfassungsvorrichtung (200) erfassten Bild (601) erscheint und andererseits dazu, die Position jedes Kennzeichnungselements (411, 412) des Betätigungsarms (401) in Abhängigkeit des von der Erfassungsvorrichtung (200) erfassten Bildes zu ermitteln.

13. Vorrichtung nach einem der vorausgehenden Ansprüche, bei der das Einspannzubehör (450) vom Betätigungsarm (401) betätigt wird und eine Kontaktseite (452) aufweist, die gegen das von der Halterung (100) gehaltene Brillenglas (L1, L2) drücken kann, und bei der der Betätigungsarm (401) einen länglichen Körper (420) und einen Aufnahmekopf (410) des Einspannzubehörs (450) umfasst, wobei der Aufnahmekopf (410) über eine Gelenkverbindung mit dem länglichen Körper (420) verbunden ist, wobei die Gelenkverbindung eine Rotationsmobilität aufweist, die von den Elektronischenverarbeitungsmitteln und/oder Datenverarbeitungsmitteln (700) gesteuert wird, sowie zwei freie Rotationsmobilitäten um einen Schwenkpunkt (P3), der sich auf der Kontaktseite (452) befindet.

14. Vorrichtung nach vorausgehendem Anspruch, bei der der Aufnahmekopf (410) eine zu seiner Mündung hin auseinanderlaufende kegelförmige Bohrung umfasst und jedes Einspannzubehör (450) einen zusammenlaufenden kegelförmigen Sockel (451), der sich in die auseinanderlaufende kegelförmige Bohrung des Aufnahmekopfes (410) stecken lässt.

15. Präparierungsverfahren eines Brillenglases (L1, L2) mithilfe einer Präparierungsvorrichtung (1) nach Anspruch 12, das folgende Arbeitsschritte umfasst:
a - Steuern der Halterung (100), um einen der Aufnahmeplätze (110, 120) in die Bearbeitungsposition für die Erfassungsvorrichtung (200) zu bringen, sowie anschließend
b - Erfassen eines ersten Bildes des im Aufnahmeplatz (110, 120) gehaltenen Brillenglases (L1, L2) und des Kennzeichnungselements (111, 121) dieses Aufnahmeplatzes (110, 120),
c - Steuern des Betätigungsarms (401) und der Halterung (100), um die am Aufnahmeplatz (110, 120) angrenzende Kalibrieröffnung (130, 131) und den Betätigungsarm (401) in eine Bearbeitungsposition für die Erfassungsvorrichtung (200) zu bringen, sowie anschließend
d - Erfassen eines Bildes des Betätigungsarms (401) und des Kennzeichnungselements (411, 412) dieses Betätigungsarms (401),
e - Identifizieren einer Abweichung zwischen einer Sollposition des Betätigungsarms (401) und seiner von der Position des erfassten Bildes des Kennzeichnungselements (411, 412) des Betätigungsarms (401) abgeleiteten tatsächlichen Position,
f - Steuern der Halterung (100), um den Aufnahmeplatz (110, 120) wieder in die Bearbeitungsposition für die Erfassungsvorrichtung (200) zurückzubringen,
g - Erfassen eines zweiten Bildes des im Aufnahmeplatz (110, 120) gehaltenen Brillenglases (L1, L2) und des Kennzeichnungselements (111, 121) dieses Aufnahmeplatzes (110, 120),
h - Identifizieren einer Abweichung zwischen einer Sollposition der Halterung (100) und seiner von den Positionen des ersten und zweiten erfassten Bildes des Kennzeichnungselements (111, 120) des Aufnahmeplatzes (110, 120) abgeleiteten tatsächlichen Position, und schließlich
i - Steuern des Betätigungsarms (401) in Richtung der Halterung (100), um das Einspannzubehör (450) gegen das Brillenglas (L1, L2) zu drücken.
